# EUROPEAN PATENT APPLICATION

(11) **EP 2 551 562 A2**
(43) Date of publication of application: **30.01.2013**
(21) Application number: 12177149.7
(22) Date of filing: 19.07.2012
(51) Int. Cl.: F16J 15/06, F16J 15/08

(54) **Seal For Turbomachine Segments**

(30) Priority: 25.07.2011 US 201113190431
(71) Applicant: General Electric Company, Schenectady, NY 12345 (US)
(72) Inventor: Giri, Sheo Narain, 560066 Bangalore, Karnataka (IN); Patil, Ajay Gangadhar, Greenville, SC South Carolina 29615 (US); Roy, Niladri, 700010 West Bengal (IN)
(74) Representative: Cleary, Fidelma

(57) **Abstract**

In one embodiment, a system includes a seal (58) having a first sealing end portion (60), a second sealing end portion (62), and an intermediate portion (58) between the first and second sealing end portions (60,62), wherein the seal (50) has at least one metering hole (51) configured to control a leakage flow across the seal (50).

## Description

### BACKGROUND OF THE INVENTION

The subject matter disclosed herein relates to seals, and more specifically, to seals disposed between segments of a turbomachine.

A variety of turbomachines, such as turbines and compressors, may include seals disposed between segments. For example, a gas turbine may include stationary segments arranged circumferentially about a rotor, which includes turbine blades. Unfortunately, the segments may experience thermal expansion and contraction, vibration, bending, and other forces, which can reduce the effectiveness of intermediate seals. Furthermore, the seals may experience substantial pressure differences between different fluid flows, such as a hot gas flow driving the turbine blades and an air flow cooling the segments. As a result, the seals may experience uncontrolled amounts of leakage, which can reduce performance and reliability of the turbomachine (e.g., gas turbine). Accordingly, a seal is needed to address one or more of these deficiencies of existing seals.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, the present invention resides in a system including a seal having a first sealing end portion, a second sealing end portion, and an intermediate portion between the first and second sealing end portions, wherein the seal has at least one metering hole configured to control a leakage flow across the seal.

In a second aspect, the invention resides in a system including a turbomachine seal having a first sealing end portion having a first and second curved sealing interface disposed opposite from one another about a first space, and the first and second curved sealing interfaces are configured to resiliently deflect toward and away from one another. The turbomachine seal also includes a second sealing end portion having a third and fourth curved sealing interface disposed opposite from one another about a second space, and the third and fourth curved sealing interfaces are configured to resiliently deflect toward and away from one another. The turbomachine seal also includes an intermediate portion extending between the first and second sealing end portions.

In a third aspect, the invention resides in a system including a turbomachine seal having a first plate having a first curved sealing interface, a second curved sealing interface, and a first intermediate portion extending between the first and second curved sealing interfaces. The turbomachine seal also includes a second plate having a third curved sealing interface, a fourth curved sealing interface, and a second intermediate portion extending between the third and fourth curved sealing interfaces. The first and second intermediate portions of the turbomachine seal are coupled together. Furthermore, the first and third curved sealing interfaces are configured to resiliently deflect toward and away from one another about a first space, and the second and fourth curved sealing interfaces are configured to resiliently deflect toward and away from one another about a second space. Also, the first and second plates of the turbomachine seal have different coefficients of thermal expansion to cause thermal bending of the turbomachine seal in response to different degrees of thermal expansion of the first and second plates.

### BRIEF DESCRIPTION OF THE DRAWINGS

Embodiments of the present invention will now be described, by way of example only, with reference to the accompanying drawings in which:
FIG. 1 is a block diagram of a turbine system having one or more seals in accordance with certain embodiments;
FIG. 2 is a perspective view of an embodiment of a two-piece seal with a plurality of metering holes, wherein opposite ends of the seal are inwardly curving to define opposite U-shaped ends;
FIG. 3 is a cross-sectional side view of an embodiment of the two-piece seal of FIG. 2 mounted between adjacent segments of a turbomachine;
FIG. 4 is a cross-sectional side view of an embodiment of the two-piece seal of FIG. 2 mounted between adjacent segments of a turbomachine, illustrating behavior of the seal in response to a thermal gradient;
FIG. 5 is a cross-sectional side view of an embodiment of the two-piece seal of FIG. 2, illustrating various dimensions of the seal;
FIG. 6 is a top view of the two-piece seal of FIGS. 2-5, taken along line 6-6 of FIG. 5, illustrating an embodiment of the metering holes in a staggered configuration of equally sized circular holes;
FIG. 7 is a top view of the two-piece seal of FIGS. 2-5, taken along line 6-6 of FIG. 5, illustrating an embodiment of the metering holes in a circular configuration of equally sized circular holes;
FIG. 8 is a top view of the two-piece seal of FIGS. 2-5, taken along line 6-6 of FIG. 5, illustrating an embodiment of the metering holes in a multi-row configuration of differently sized circular holes;
FIG. 9 is a top view of the two-piece seal of FIGS. 2-5, taken along line 6-6 of FIG. 5, illustrating an embodiment of the metering holes in a single row configuration of equally sized circular holes;
FIG. 10 is a top view of the two-piece seal of FIGS. 2-5, taken along line 6-6 of FIG. 5, illustrating an embodiment of the metering holes in a multi-row configuration of differently shaped holes (e.g., elliptical, square, and rectangular holes);
FIG. 11 is a top view of the two-piece seal of FIGS. 2-5, taken along line 6-6 of FIG. 5, illustrating an embodiment of the metering holes in a multi-row configuration of differently shaped holes (e.g., chevron-shaped, diamond-shaped, and X-shaped holes);
FIG. 12 is a top view of the two-piece seal of FIGS. 2-5, taken along line 6-6 of FIG. 5, illustrating an embodiment of the metering holes in a multi-row configuration of differently shaped holes (e.g., triangular and circular holes);
FIG. 13 is a partial cross-sectional side view of the two-piece seal of FIGS. 2-12, taken along line 13-13 of FIG. 6, illustrating an embodiment of one of the metering holes having a cylindrical shape of a constant diameter at a perpendicular angle;
FIG. 14 is a partial cross-sectional side view of the two-piece seal of FIGS. 2-12, taken along line 13-13 of FIG. 6, illustrating an embodiment of one of the metering holes having a conical shape of a variable diameter;
FIG. 15 is a partial cross-sectional side view of the two-piece seal of FIGS. 2-12, taken along line 13-13 of FIG. 6, illustrating an embodiment of one of the metering holes having a cylindrical shape of a constant diameter at a non-perpendicular angle;
FIG. 16 is a partial cross-sectional side view of the two-piece seal of FIGS. 2-12, taken along line 13-13 of FIG. 6, illustrating an embodiment of one of the metering holes having a forked path (e.g., Y-shaped split path);
FIG. 17 is a partial cross-sectional side view of the two-piece seal of FIGS. 2-12, taken along line 13-13 of FIG. 6, illustrating an embodiment of one of the metering holes having a forked path (e.g., V-shaped split path);
FIG. 18 is a perspective view of an embodiment of a two-piece seal with a plurality of metering holes, wherein opposite ends of the seal are outwardly curving to defme opposite W-shaped ends;
FIG. 19 is a cross-sectional side view of an embodiment of the two-piece seal of FIG. 18 mounted between adjacent segments of a turbomachine;
FIG. 20 is a cross-sectional side view of an embodiment of the two-piece seal of FIG. 18, illustrating various dimensions of the seal;
FIG. 21 is a perspective view of an embodiment of a one-piece seal with a plurality of metering holes, wherein opposite ends of the seal curve in opposite directions to define an S-shaped geometry;
FIG. 22 is a cross-sectional side view of an embodiment of the one-piece seal of FIG. 21 mounted between adjacent segments of a turbomachine;
FIG. 23 is a cross-sectional side view of an embodiment of the one-piece seal of FIG. 21, illustrating various dimensions of the seal;
FIG. 24 is a perspective view of an embodiment of a one-piece seal with a plurality of metering holes, wherein the seal includes an intermediate wavy portion and opposite curved end portions (e.g., U-shaped end portions);
FIG. 25 is a cross-sectional side view of an embodiment of the one-piece seal of FIG. 24 mounted between adjacent segments of a turbomachine;
FIG. 26 is a cross-sectional side view of an embodiment of the one-piece seal of FIG. 24, illustrating various dimensions of the seal;
FIG. 27 is a perspective view of an embodiment of a one-piece seal without metering holes, wherein the seal includes an intermediate wavy portion and opposite curved end portions (e.g., U-shaped end portions); and
FIG. 28 is a cross-sectional side view of an embodiment of the one-piece seal of FIG. 27 mounted within a seal region.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As discussed in detail below, the disclosed embodiments include a variety of seals that may be used in turbomachines, such as compressors and turbines, and other applications. In certain embodiments, the seals may include holes specifically designed to control leakage and/or cool various seal surfaces. In the following discussion, these holes may be referred to as metering holes or impingement cooling holes, although the holes may provide any combination of metering or cooling functionality. For example, the holes may be specifically sized and/or shaped to control or meter the amount of leakage (e.g., leakage flow rate) from one side of the seal to an opposite side of the seal. In this manner, the metered leakage flow may ensure that uncontrolled amounts of leakage do not occur between the seal and the seal surfaces along the turbomachine. Furthermore, the holes may be specifically sized, shaped, or angled to provide cooling flows to hot regions on or adjacent the seal. In some embodiments, the holes may be configured to provide film cooling or impingement cooling. In addition to the disclosed holes, the seals may have curved end portions to enable pivoting or rotation along the seal surfaces of the turbomachine. For example, the curved end portions may ensure that contact is maintained between the seal and the seal surfaces despite any movement due to thermal expansion and contraction, vibration, and so forth. The curved end portions also may act as springs, such that a biasing force is maintained along the seal surfaces. The disclosed seals may include one-piece seals and multi-piece seals, such as a two-piece seal made with two different materials. In certain embodiments, the two-piece seal may be made of two different materials (e.g., bimetallic), which have different coefficients of thermal expansion. Thus, the different materials of the seal may respond differently to thermal changes, thereby causing thermal bending to assist with sealing against the seal surfaces. In the following discussion, reference is made to a turbine system 10, although the disclosed seals may be used in any type of turbomachine, combustion systems, thermal fluid systems, and so forth.

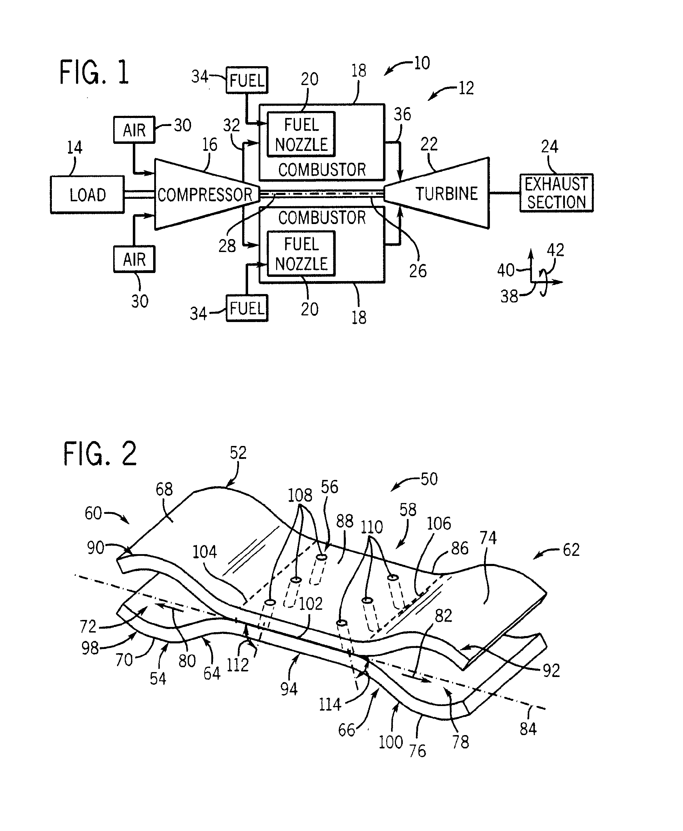

FIG. 1 is a block diagram of an embodiment of a turbine system 10 that may use one or more of the seals discussed in further detail below. The illustrated turbine system 10 includes a gas turbine engine 12 coupled to a load 14, such as an electrical generator. The gas turbine engine 12 includes a compressor 16, a plurality of combustors 18 each having at least one fuel nozzle 20, a turbine 22, and an exhaust section 24. As illustrated, one or more shafts 26 connect the load 14, compressor 16, and turbine 22. The compressor 16 and the turbine 22 each include a rotor with blades, which rotate about a rotational axis 28 within a stator or shroud. In operation, the compressor 16 receives air 30 and delivers compressed air 32 to the combustors 18 and/or fuel nozzles 20, which then inject fuel 34 (or an air-fuel mixture) into a combustion region in the combustors 18. In turn, the air-fuel mixture combusts in the combustors 18 to produce hot combustion gases 36, which drive blades within the turbine 18. As the turbine is driven to rotate the shaft 26, the compressor 16 is driven to compress the air 16 into the combustors 18 and/or fuel nozzles 20. For purposes of discussion, reference may be made to an axial direction or axis 38, a radial direction or axis 40, and a circumferential direction or axis 42. The axial direction 38 is generally oriented along the rotational axis 28. In certain embodiments, the seals discussed below may be oriented between shroud segments positioned side-by-side in the axial direction 38, the radial direction 40, the circumferential direction 42, or any combination thereof. However, the seals may be used in any suitable location within the turbine system 10 or other equipment.

FIG. 2 is a perspective view of an embodiment of a two-piece seal 50 (first and second pieces 52 and 54) with a plurality of metering holes 56, wherein the seal 50 includes an intermediate portion 58 and opposite first and second sealing end portions 60 and 62 inwardly curving to define opposite U-shaped ends 64 and 66. In the illustrated embodiment, the first sealing end portion 60 having the U-shaped end 64 has curved sealing interfaces 68 and 70 disposed opposite from one another about a first space 72. The curved sealing interfaces 68 and 70 curve away from one another and then curve toward one another in a direction 80 away from the intermediate portion 58. Similarly, the second sealing end portion 62 having the U-shaped end 66 has curved sealing interfaces 74 and 76 disposed opposite from one another about a second space 78. The curved sealing interfaces 74 and 76 curve away from one another and then curve toward one another in a direction 82 away from the intermediate portion 58. Accordingly, each curved sealing interface 68, 70, 74, and 76 may be described as cup-shaped, outwardly curved, or convex relative to a longitudinal axis 84. As discussed below, the two-piece construction (e.g., pieces 52 and 54), the metering holes 56, and the opposite U-shaped ends 64 and 66 substantially improve the performance of the seal 50 in environments subject to high temperatures, vibration, motion, and thermal expansion and contraction.

Although the seal 50 may be a one-piece structure, the illustrated embodiment of the seal 50 is made with first and second pieces 52 and 54 coupled together at the intermediate portion 58. The first piece 52 includes a first plate 86 having a first intermediate plate portion 88 disposed between opposite curved end plate portions 90 and 92, wherein the curved end plate portion 90 includes the curved sealing interface 68, and the curved end plate portion 92 includes the curved sealing interface 74. The second piece 54 includes a second plate 94 having a first intermediate plate portion 96 disposed between opposite curved end plate portions 98 and 100, wherein the curved end plate portion 98 includes the curved sealing interface 70, and the curved end plate portion 100 includes the curved sealing interface 76. As illustrated, the curved end plate portions 90 and 98 of the first and second plate 86 and 94 have the curved sealing interfaces 68 and 70 curving away from one another and then curving toward one another in the direction 80 away from the first and second intermediate plate portions 88 and 96. Similarly, the curved end plate portions 92 and 100 of the first and second plate 86 and 94 have the curved sealing interfaces 74 and 76 curving away from one another and then curving toward one another in the direction 82 away from the first and second intermediate plate portions 88 and 96. The first and second intermediate plate portions 88 and 96 are coupled together at an interface 102 along the longitudinal axis 84 at one or more locations, such as joints 104 and 106. For example, the interface 102 may be a planar interface between the plate portions 88 and 96, while the joints 104 and 106 may be linear joints, planar joints, or spot joints between the plate portions 88 and 96. For example, the linear joints 104 and 106 are depicted as linear joints, as represented by dashed lines 104 and 106. The joints 104 and 106 may include welded joints, brazed joints, diffusion bonded joints, adhesive joints, or any other type of fastening mechanism.

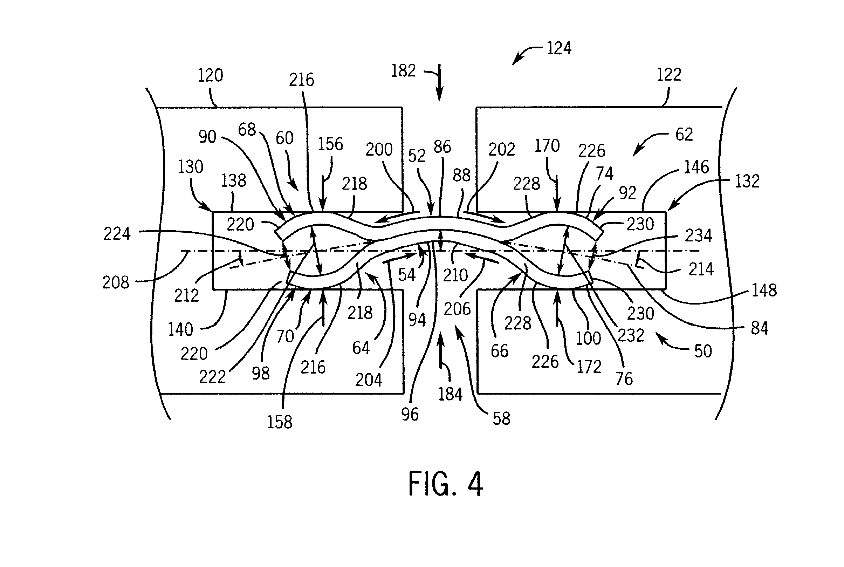

In certain embodiments, the first and second pieces 52 and 54 may be constructed of the same material or a different material. For example, the pieces 52 and 54 may be made of the same or different metals, such as different spring steels or nickel based alloys. By further example, the pieces 52 and 54 may be made with materials having the same or different coefficient of thermal expansion, modulus of elasticity, materials, or a combination thereof. The first and second pieces 52 and 54 also may be constructed with different thicknesses or other dimensions to vary the bending stiffness of the curved end plate portions 90, 92, 98, and 100. As discussed below, the different construction of the two pieces 52 and 54 may improve the performance of the seal 50 subjected to high temperatures. For example, the two-piece seal 50 constructed with the first and second pieces 52 and 54 made of two different materials with different coefficients of thermal expansion may cause the seal 50 to bend or bow along its longitudinal axis 84, thereby improving the sealing effectiveness between sealing surfaces. This thermal bending behavior of the seal 50 is discussed in further detail below with reference to FIG. 4.

The shape or geometry of the seal 50 also may improve the sealing effectiveness of the seal 50, particularly in environments subject to high temperatures, vibration, motion, and thermal expansion and contraction. In the illustrated embodiment, the intermediate plate portions 88 and 96 of the plates 86 and 94 are substantially flat or planar, although other embodiments of the plate portions 88 and 96 may have a wavy shape as discussed in further detail below. Furthermore, the intermediate plate portions 88 and 96 (e.g., joints 104 and 106) may function as pivot points, axes of rotation, or axes of bending for the curved end plate portions 90, 92, 98, and 100 of the plates 86 and 94. The curved sealing interfaces 68 and 70 along the curved end plate portions 90 and 98 are configured to resiliently deflect toward and away from one another relative to the intermediate portion 58 (e.g., portions 88 and 96), and the curved sealing interfaces 74 and 76 along the curved end plate portions 92 and 100 are configured to resiliently deflect toward and away from one another relative to the intermediate portion 58 (e.g., portions 88 and 96). For example, the resilient deflection of the curved end plate portions 90, 92, 98, and 100 may occur relative to the joints 104 and 106. Thus, the U-shaped end 64 defined by the opposite curved end plate portions 90 and 98 (e.g., curved sealing interfaces 68 and 70) may serve as a first U-shaped spring element, while the U-shaped end 66 defined by the opposite curved end plate portions 92 and 100 (e.g., curved sealing interfaces 74 and 76) may serve as a second U-shaped spring element. Together, the U-shaped ends 64 and 66 and the intermediate portion 58 may be described as forming an X-shaped seal 50, such as a spring-loaded X-shaped seal 50. The U-shaped ends 64 and 66 also may serve as rotational joints, pivot joints, or cam members, thereby enabling rotational motion along sealing surfaces. For example, the curved sealing interfaces 68 and 70 are configured to enable rotation of the sealing end portion 60 along a first sealing region, while the curved sealing interfaces 74 and 76 are configured to enable rotation of the second sealing end portion 62 along a second sealing region.

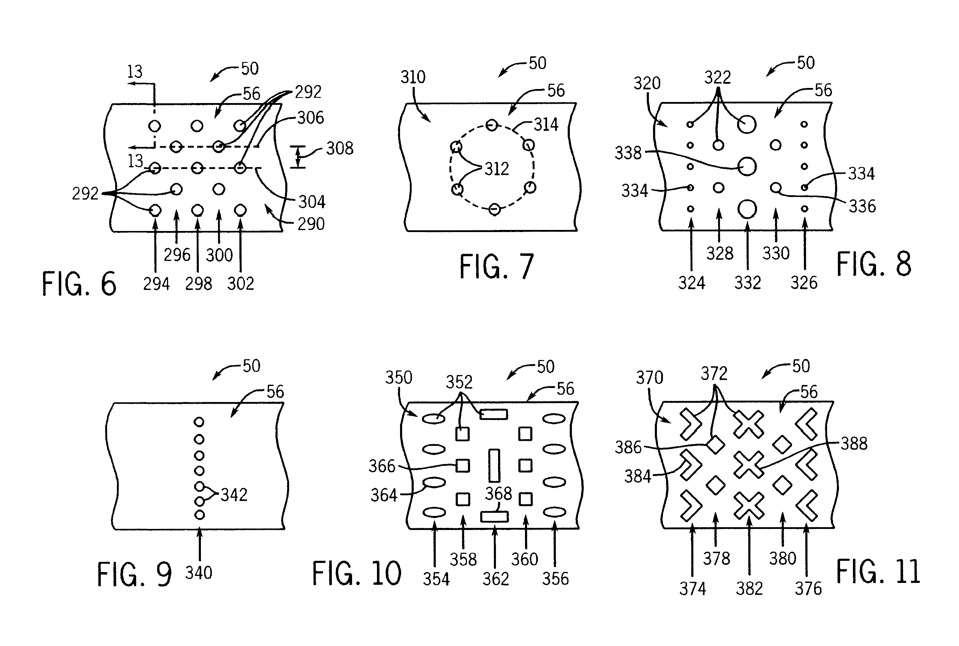

The illustrated metering holes 56 include a first plurality of metering holes 108 and a second plurality of metering holes 110. The metering holes 56 are configured to control or meter the leakage flow through the seal 50. For example, the metering holes 56 may be designed to provide a certain flow rate or percentage of leakage flow depending on the particular application. In this manner, the metering holes 56 may permit a controlled amount of leakage flow to improve the sealing effectiveness of the seal 50 along the curved sealing interfaces 68, 70, 74, and 76, thereby reducing the possibility of leakage along the curved sealing interfaces 68, 70, 74, and 76. The metering holes 56 also may be used for cooling various hot regions along the seal 50, in the seal regions, or in the parts adjacent the seal regions. For example, the metering holes 56 may be configured to provide film cooling (e.g., a thin film of coolant flow) along a surface of the seal 50 or adjacent structures, or the metering holes 56 may be configured to provide impingement cooling (e.g., jets of coolant flow) against a surface of the seal 50 or adjacent structures. The film cooling may be described as flowing parallel to the surface being cooled, whereas the impingement cooling may be described as flow crosswise (e.g., perpendicular) to the surface being cooled. However, the metering holes 56 may be oriented at any angle relative to hot regions to cool the hot regions. For example, the first plurality of metering holes 108 may be directed toward the first sealing end portion 60 (e.g., curved sealing interface 68 or 70) or associated sealing region at a first angle 112, while the second plurality of metering holes 110 may be directed toward the second sealing end portion 62 (e.g., curved sealing interface 74 or 76) or associated sealing region at a second angle 114. The angles 112 and 114 may range between approximately 0 to 90, 5 to 60, 10 to 45, or 15 to 30 degrees. Various angles, shapes, and configurations of the metering holes 56 are discussed in further detail below with reference to FIGS. 6-17.

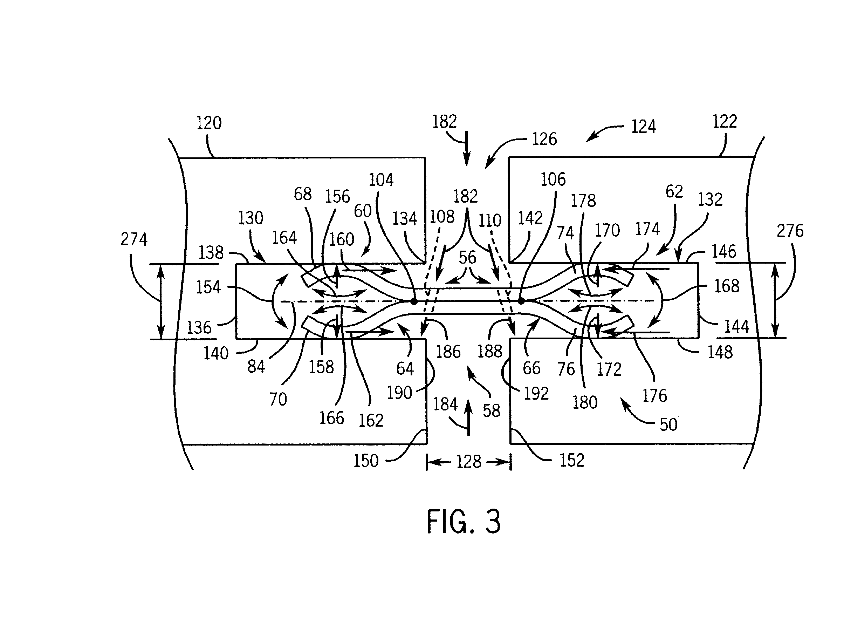

FIG. 3 is a cross-sectional side view of an embodiment of the two-piece seal 50 of FIG. 2 mounted between adjacent segments 120 and 122 of a turbomachine 124, e.g., the turbine system 10. In certain embodiments, the adjacent segments 120 and 122 may be disposed side-by-side in the axial direction 38, the radial direction 40, or the circumferential direction 42 with an intermediate gap or space 126. For example, the gap 126 may have a width 128 between the adjacent segments 120 and 122. The illustrated seal 50 extends across the gap 126 into opposite first and second seal regions 130 and 132 (e.g., slots, recesses, or chambers) in the adjacent segments 120 and 122. For example, the first seal region 130 may include a first opening 134, a first base wall 136, and opposite side walls 138 and 140 extending from the first opening 134 to the first base wall 136. The second seal region 132 may include a second opening 142, a second base wall 144, and opposite side walls 146 and 148 extending from the second opening 142 to the second base wall 144. The first sealing end portion 60 is disposed within the first seal region 130, such that the curved sealing interface 68 is disposed along the side wall 138, and the curved sealing interface 70 is disposed along the side wall 140. The second sealing end portion 62 is disposed within the second seal region 132, such that the curved sealing interface 74 is disposed along the side wall 146, and the curved sealing interface 76 is disposed along the side wall 148. The intermediate portion 58 of the seal 50 is disposed in the gap 126 between opposite faces 150 and 152 of the respective segments 120 and 122, and includes the metering holes 56 (e.g., 108 and 110) to control a leakage flow and/or cool hot regions on or near the seal 50.

In the illustrated embodiment, the first and second sealing end portions 60 and 62 are configured to seal with the respective seal regions 130 and 132 via spring forces and frictional forces. For example, the first sealing end portion 60 includes the U-shaped end 64 with the opposite curved sealing interfaces 68 and 70, which are configured to deflect toward and away from one another as indicated by arrow 154, thereby providing biasing forces or spring forces 156 and 158 against the side walls 138 and 140. For example, the curved sealing interfaces 68 and 70 may be compressed together between the side walls 138 and 140, such that the curved sealing interfaces 68 and 70 maintain contact despite vibration or motion. The curved sealing interfaces 68 and 70 are also frictionally seated along the side walls 138 and 140 via respective frictional forces 160 and 162. Furthermore, the curved sealing interfaces 68 and 70 are also configured to pivot or rotate relative to the side walls 138 and 140 as indicated by rotational arrows 164 and 166. As discussed in further detail below with reference to FIG. 4, the rotational motion 164 and 166 along the side walls 138 and 140 may result from a bending or bowing of the spring 50. Similarly, the second sealing end portion 62 includes the U-shaped end 66 with the opposite curved sealing interfaces 74 and 76, which are configured to deflect toward and away from one another as indicated by arrow 168, thereby providing biasing forces or spring forces 170 and 172 against the side walls 146 and 148. For example, the curved sealing interfaces 74 and 76 may be compressed together between the side walls 146 and 148, such that the curved sealing interfaces 74 and 76 maintain contact despite vibration or motion. The curved sealing interfaces 74 and 76 are also frictionally seated along the side walls 146 and 148 via respective frictional forces 174 and 176. Furthermore, the curved sealing interfaces 74 and 76 are also configured to pivot or rotate relative to the side walls 146 and 148 as indicated by rotational arrows 178 and 180. As discussed in further detail below with reference to FIG. 4, the rotational motion 178 and 180 along the side walls 146 and 148 may result from a bending or bowing of the spring 50.

In operation, the seal 50 is configured to seal the gap 126 between the adjacent segments 120 and 122 between a first fluid region or flow 182 and a second fluid region or flow 184. For example, in certain embodiments, the first flow 182 may be substantially cooler than the second flow 184. In context of a turbomachine, such as a compressor or turbine, the first flow 182 may be a cooling flow (e.g., air flow), while the second flow 184 may be a heated fluid such as compressed air, hot gases of combustion, or the like. Accordingly, the seal 50 may be subjected to significant temperatures, thermal gradients, vibration, motion, and thermal expansion and contraction between the segments 120 and 122. For example, the width 128 of the gap 126 may decrease in response to thermal expansion of the segments 120 and 122, while the width 128 may increase in response to thermal contraction of the segments 120 and 122. Accordingly, the biasing forces 156, 158, 170, and 172, the frictional forces 160, 162, 174, and 176, the deflection motion 154 and 168, and the rotational motion 164, 166, 178, and 180 may be configured to maintain a positive and consistent sealing interface between the seal 50 and the side walls 138, 140, 146, and 148 of the seal regions 130 and 132 despite the conditions of the system.

The metering holes 56 further improve the seal 50 by controlling any leakage flow between the first and second flows 182 and 184. In the illustrated embodiments, the leakage flow includes a first fluid flow 186 (e.g., air flow) through the first plurality of metering holes 108, and a second fluid flow 188 (e.g., air flow) through the second plurality of metering holes 110. These fluid flows 186 and 188 are configured to control the amount of leakage flow from region 182 to region 184, thereby helping to reduce the possibility of leakage along the curved seal interfaces 68, 70, 74, and 76. The fluid flows 186 and 188 also provide cooling in the vicinity of the seal 50, e.g., areas 190 and 192. As illustrated, the metering holes 56 (e.g., metering holes 108 and 110) are angled away from one another toward the opposite segments 120 and 122 and/or associated seal regions 130 and 132. For example, the fluid flows 186 and 188 may be angled to flow into the seal regions 130 and 132 to help cool the side walls 138, 140, 146, and 148 and the curved sealing interfaces 70 and 76 of the seal 50. In this manner, the cooling fluid flows 186 and 188 may protect the seal 50 and/or walls 138, 140, 146, and 148 from any thermal damage, wear, or the like. The cooling flows 186 and 188 also may serve as shielding fluid flows to reduce chemical attack, corrosion, or other damage to the seal 50 caused by the second fluid flow 184.

FIG. 4 is a cross-sectional side view of an embodiment of the two-piece seal 50 of FIG. 2 mounted between adjacent segments 120 and 122 of a turbomachine 124, illustrating behavior of the seal 50 in response to a thermal gradient. In the illustrated embodiment, the two-piece seal 50 has the first and second pieces 52 and 54 (e.g., first and second plates 86 and 94) made with two different materials and/or coefficients of thermal expansion. For example, the first piece 52 (e.g., plate 86) may be made out of a first metal with a first coefficient of thermal expansion, while the second piece 54 (e.g., plate 94) may be made out of a second metal with a second coefficient of thermal expansion. As depicted, as the seal 50 is subjected to hot or cold fluid during operation of the turbomachine 124, the first plate 86 may undergo a greater amount of thermal expansion than the second plate 94 as indicated by diverging arrows 200 and 202, or the second plate 94 may undergo a greater amount of thermal contraction than the first plate 86 as indicated by converging arrows 204 and 206. As a result, the entire seal 50 experiences bending or bowing along its longitudinal axis 84. For example, the thermal expansion and/or contraction may cause the longitudinal axis of the seal 50 to bend or bow upwardly away from an axis 208 extending through the seal regions 130 and 132. In particular, the intermediate portion 58 of the seal 50 may bow or bend upwardly above the axis 208, such that the axes 84 and 208 are offset from one another by a distance 210. The first and second sealing end portions 60 and 62 also may shift away from the axis 208. For example, the longitudinal axis 84 through the sealing end portions 60 and 62 may become angled relative to the axis 208, as indicated by angles 212 and 214. In certain embodiments, the bowing or bending of the seal 50 may further improve the sealing effectiveness of the seal 50 between the segments 120 and 122. For example, the bowing or bending of the seal 50 may increase the biasing forces 156, 158, 170, and 172 between the curved sealing interfaces 68, 70, 74, and 76 and the associated side walls 138, 140, 146, and 148 of the seal regions 130 and 132. The increased biasing forces 156, 158, 170, and 172 may be caused by greater defection of the curved sealing interfaces 68, 70, 74, and 76, which may result from the shape of the sealing end portions 60 and 62 and/or the bowing through the intermediate portion 58 of the seal 50.

As further illustrated in FIG. 4, the curved sealing interfaces 68, 70, 74, and 76 may slide and/or pivot along the walls during the thermal expansion and/or contraction of the seal 50. For example, the curved sealing interfaces 68 and 74 are shown in contact with the side walls 138 and 146 in closer proximity to the intermediate portion 58, while the curved sealing interfaces 70 and 76 are shown in contact with the side walls 140 and 148 further away from the intermediate portion 58. The curved sealing interfaces 68, 70, 74, and 76 are curved inwardly toward one another to ensure contact despite this sliding and/or pivotal movement. For example, the curved sealing interfaces 68 and 70 each include central curved portions 216, converging curved portions 218, and converging curved portions 220. The central curved portions 216 are offset from one another by a central distance 222, the converging curved portions 218 intersect one another (i.e., no offset distance), and the converging curved portions 220 are offset from one another by a peripheral distance 224 less than the central distance 222. As a result, the curved sealing interfaces 68 and 70 are able to rotate in either direction while maintaining contact with the side walls 138 and 140. Similarly, the curved sealing interfaces 74 and 76 each include central curved portions 226, converging curved portions 228, and converging curved portions 230. The central curved portions 226 are offset from one another by a central distance 232, the converging curved portions 228 intersect one another (i.e., no offset distance), and the converging curved portions 230 are offset from one another by a peripheral distance 234 less than the central distance 232. As a result, the curved sealing interfaces 74 and 76 are able to rotate in either direction while maintaining contact with the side walls 146 and 148.

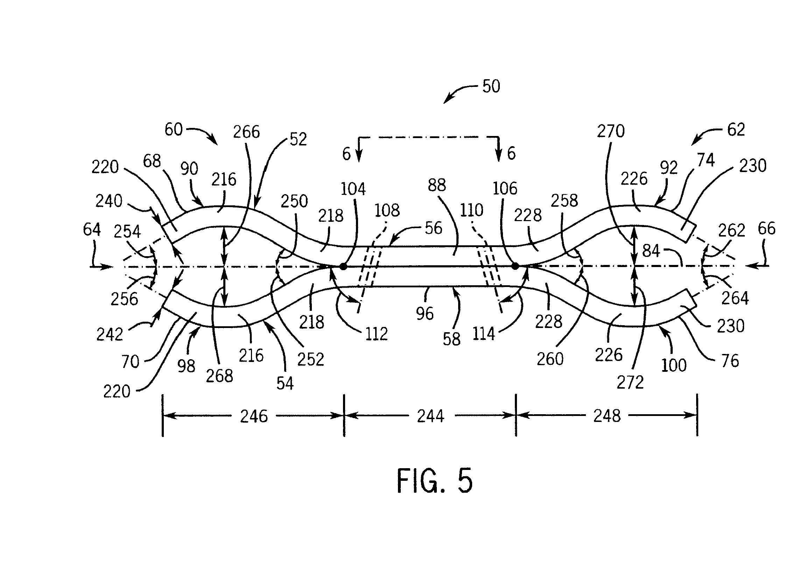

FIG. 5 is a cross-sectional side view of an embodiment of the two-piece seal 50 of FIG. 2, illustrating various dimensions of the seal 50. As illustrated, the seal 50 includes the first piece 52 (e.g., first plate 86) and the second piece 54 (e.g., second plate 94). In certain embodiments, the first and second plates 86 and 94 may have equal or different thicknesses 240 and 242 to control the bending stiffness or other characteristics of the spring 50, e.g., in the U-shaped ends 64 and 66. For example, each plate 86 and 94 may have a uniform or variable thickness 240 or 242 lengthwise along the longitudinal axis 84. For example, the thickness 240 or 242 may increase or decrease with distance from the intermediate portion 58. The seal 50 also includes a central length 244 of the intermediate portion 58, an end length 246 of the first sealing end portion 60, and an end length 248 of the sealing end portion 62. These lengths 244, 246, and 248 may be varied to control the range of defection of the entire seal 50 as well as the U-shaped ends 64 and 66. Furthermore, the central length 244 may be selected based on the width 128 of the gap 126 between adjacent segments 120 and 122, while the end lengths 246 and 248 may be selected based on the depths of the sealing regions 130 and 132 in the adjacent segments 120 and 122.

The seal 50 also includes various angles and offsets relative to the longitudinal axis 84 through the seal 50. For example, the curved end plate portions 90, 92, 98, and 100 may be disposed at respective angles 250, 252, 254, 256, 258, 260, 262, and 264 relative to the longitudinal axis 84, wherein the angles may be approximately 0 to 90, 5 to 75, 10 to 60, 15 to 45, or 20 to 30 degrees. In particular, the angles are selected to provide convergence toward the longitudinal axis 84 at opposite ends of each curved end plate portion 90, 92, 98, and 100, thereby enabling the curved sealing interfaces 68, 70, 74, and 76 to maintain contact while pivoting along the side walls 138, 140, 146, and 148. For example, the curved end plate portions 90 and 98 have the converging curved portions 218 at the angles 250 and 252 adjacent the intermediate portion 58, and the converging curved portions 220 at the angles 254 and 256 furthest away from the intermediate portion 58. Similarly, the curved end plate portions 92 and 100 have the converging curved portions 228 at the angles 258 and 260 adjacent the intermediate portion 58, and the converging curved portions 230 at the angles 262 and 264 furthest away from the intermediate portion 58. These angles may be increased to enable a greater range of pivoting movement of the curved sealing interfaces 68, 70, 74, and 76 along the side walls 138, 140, 146, and 148. Furthermore, the radii of each curved portion 216, 218, 220, 226, 228, and 230 may be adjusted to control the slope of pivoting movement.

As further illustrated in FIG. 5, the offset distance between the curved end plate portions 90, 92, 98, and 100 may be increased or decreased to control the spring stiffness (e.g., biasing forces), the range of deflection, and other characteristics of the U-shaped ends 64 and 66. For example, the curved end plate portions 90, 92, 98, and 100 may be disposed at offset distances 266, 268, 270, and 272 relative to the longitudinal axis 84, wherein the offset distances may be based on a distance 274 (FIG. 3) between the side walls 138 and 140 a distance 276 (FIG. 3) between the side walls 146 and 148 in the seal regions 130 and 132. For example, the offset distances 266, 268, 270, and 272 may be approximately 50 to 200, 55 to 150, or 60 to 125, or 75 to 100 percent of the distances 274 and 276 while not installed in the sealing regions 130 and 132. In the illustrated embodiment, the offset distances 266, 268, 270, and 272 are defined between the central curved portions 216 and 226 of the respective U-shaped ends 64 and 66. In other embodiments, the offset distances may be defined between the converging curved portions 220 and 230, and may have similar ranges as discussed above. Accordingly, a variety of dimensions may be controlled to improve the effectiveness of the seal 50.

The metering holes 56 also may have a variety of angles, shapes, and configurations configured to control the leakage flow and cooling. As illustrated in FIG. 5, the first plurality of metering holes 108 are disposed at the angle 112 relative to the longitudinal axis 84, while the second plurality of metering holes 110 are disposed at the angle 114 relative to the longitudinal axis 84. These angles 112 and 114 may be approximately 0 to 90, 20 to 70, 30 to 60, or 40 to 50 degrees, or any other suitable angle. Embodiments of the metering holes 108 and 110 may have angles 112 and 114 of approximately 10, 20, 30, 40, 50, or 60 degrees, for example.

The seal 50 depicted in FIGS. 2-5 may be constructed with a variety of manufacturing techniques. For example, a flat metal plate may be roll formed to produce the first and second plates 86 and 94. Subsequently, the plates 86 and 94 may be coupled together at the intermediate portion 58. For example, the intermediate plate portions 88 and 96 maybe coupled together via welding, brazing, diffusion bonding, fasteners, or any combination thereof. The metering holes 56 may be formed after connecting the intermediate plate portions 88 and 96, for example, by punching or drilling the holes 108 and 110 through both plates 86 and 94. In some embodiments, the seal 50 may be further treated with a coating or heat treatment. For example, a wear resistant coating, a chemical resistant coating, a thermal barrier coating, a sealant coating, a low friction coating, or any combination thereof, may be added to all or part of the exterior surface of the seal 50.

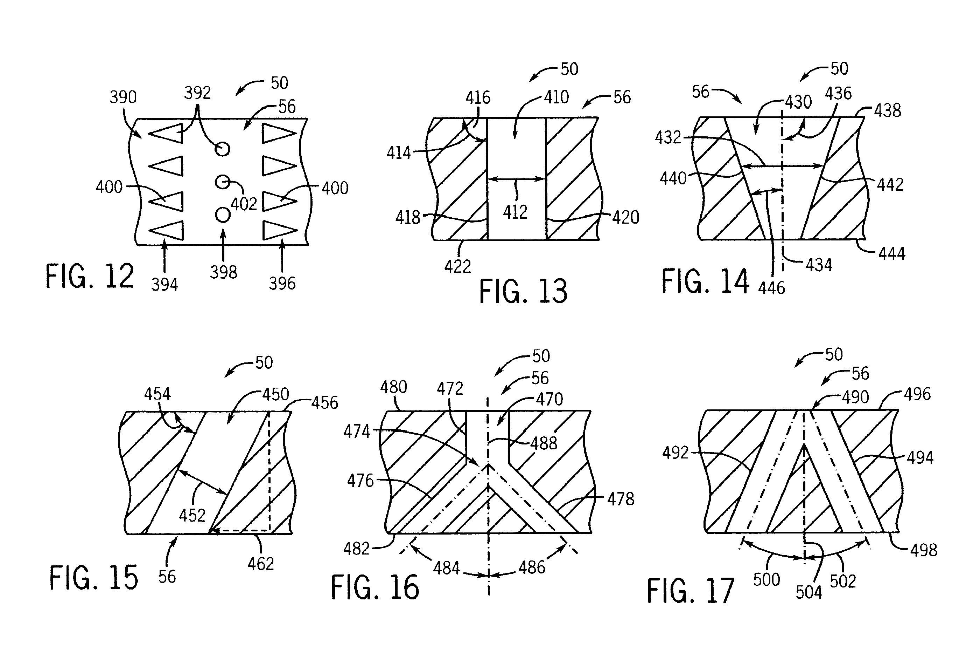

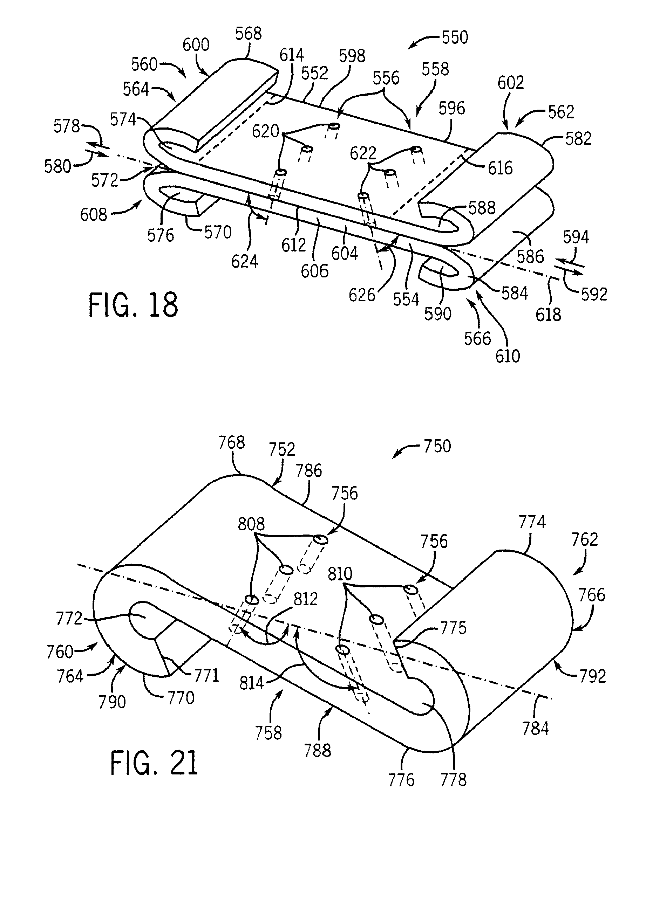

FIGS. 6-12 are top views of the seal 50 of FIGS. 2-5, taken along line 6-6 of FIG. 5, illustrating various embodiments of configurations of the metering holes 56. The illustrated configurations may be applicable to a one-piece or multi-piece construction of the seal 50 of FIGS. 2-5, or any one of the seals depicted in FIGS. 18-28. Furthermore, the illustrated configurations may be applicable to any of size, shape, or angle of metering holes 56, such as those set forth in FIGS. 13-17. Referring first to FIG.6, a top view of the two-piece seal 50 of FIGS. 2-5, taken along line 6-6 of FIG. 5, is provided to illustrate an embodiment of the metering holes 56 in a staggered configuration 290 of equally sized circular holes 292. In the illustrated embodiment, the staggered configuration 290 has the equally sized circular holes 292 arranged in a staggered rows 294, 296, 298, 300, and 302, wherein alternating rows align with one another. In particular, rows 294, 298, and 302 have the equally sized circular holes 292 aligned with one another along parallel lines, such as line 304, while rows 296 and 300 have the equally circular holes 292 aligned with one another along parallel lines, such as line 306. As illustrated, these parallel lines (e.g., lines 304 and 306) are offset from one another by a stagger distance 308, thereby defining the staggered configuration 290. In some embodiments, the holes 56, 292 may be non-circular and/or non-uniformly sized as discussed in detail below. The angles of the holes 56, 292 also may be uniform or non-uniform. The illustrated configuration 290 may be selected to meter the leakage flow and increase cooling of the seal 50, the seal regions 130 and 132, or the segments 120 and 122.

FIG. 7 is a top view of the two-piece seal 50 of FIGS. 2-5, taken along line 6-6 of FIG. 5, illustrating an embodiment of the metering holes 56 in a circular configuration 310 of equally sized circular holes 312. In the illustrated embodiment, the circular configuration 310 has the equally sized circular holes 312 arranged along a circular line or axis 314. In some embodiments, the circular configuration 310 may include a plurality of circular lines 314 of the equally sized circular holes 312. For example, the circular lines 314 of holes 312 may be arranged side by side, concentric with one another, or any combination thereof. Again, the holes 56, 312 may have uniform or non-uniform angles, shapes, sizes, or other characteristics. The illustrated configuration 310 may be selected to meter the leakage flow and increase cooling of the seal 50, the seal regions 130 and 132, or the segments 120 and 122.

FIG. 8 is a top view of the two-piece seal 50 of FIGS. 2-5, taken along line 6-6 of FIG. 5, illustrating an embodiment of the metering holes 56 in a multi-row configuration 320 of differently sized circular holes 322. In the illustrated embodiment, the multi-row configuration 320 has the differently sized circular holes 322 arranged in a staggered rows 324, 326, 328, 330, and 332. In particular, rows 324 and 326 have first sized holes 334, rows 328 and 330 have second sized holes 336, and row 332 has third sized holes 338. In the illustrated embodiment, the holes 334, 336, and 338 progressively increase in diameter, although other embodiments may progressively decrease in diameter or alternate in diameter. For example, the smallest holes 334 may be disposed in the outermost rows 324 and 326 to provide film cooling and/or impingement cooling of the seal 50 and the seal regions 130 and 132. By further example, the medium holes 336 and large holes 338 may be configured to meter the leakage flow and/or provide central cooling of the seal 50. Again, the holes 56 (e.g., 334, 336, and 338) may have uniform or non-uniform angles, shapes, sizes, or other characteristics. The illustrated configuration 320 may be selected to meter the leakage flow and increase cooling of the seal 50, the seal regions 130 and 132, or the segments 120 and 122.

FIG. 9 is a top view of the two-piece seal 50 of FIGS. 2-5, taken along line 6-6 of FIG. 5, illustrating an embodiment of the metering holes 56 in a single row configuration 340 of equally sized circular holes 342. In the illustrated embodiment, the single row configuration 340 may be disposed centrally along the intermediate portion 58 of the seal 50 or at any other location. Again, the holes 56, 342 may have uniform or non-uniform angles, shapes, sizes, or other characteristics. For example, the single row configuration 340 may include holes 342 that gradually increase in diameter, decrease in diameter, or alternatingly increase and decrease in diameter along the row. By further example, the single row configuration 340 may include holes 342 that are angled in a common direction or alternative between opposite directions. The illustrated configuration 340 may be selected to meter the leakage flow and increase cooling of the seal 50, the seal regions 130 and 132, or the segments 120 and 122.

FIG. 10 is a top view of the two-piece seal 50 of FIGS. 2-5, taken along line 6-6 of FIG. 5, illustrating an embodiment of the metering holes 56 in a multi-row configuration 350 of differently shaped holes 352 (e.g., elliptical, square, and rectangular holes). In the illustrated embodiment, the multi-row configuration 350 has the differently shaped holes 352 arranged in staggered rows 354, 356, 358, 360, and 362. In particular, rows 354 and 356 have first shaped holes 364, rows 358 and 360 have second shaped holes 366, and row 362 has third shaped holes 368. In the illustrated embodiment, the first shaped holes 364 are elliptical, the second shaped holes 366 are square, and the third shaped holes 368 are rectangular. For example, the elliptical holes 364 may be disposed in the outermost rows 354 and 356, and may be elongated in the direction of the seal regions 130 and 132. Accordingly, the elliptical holes 364 may be configured to provide film cooling and/or impingement cooling of the seal 50 and the seal regions 130 and 132. By further example, the square holes 366 and rectangular holes 368 may be configured to meter the leakage flow and/or provide central cooling of the seal 50. Again, the holes 56 (e.g., 364, 366, and 368) may have uniform or non-uniform angles, shapes, sizes, or other characteristics. The illustrated configuration 350 may be selected to meter the leakage flow and increase cooling of the seal 50, the seal regions 130 and 132, or the segments 120 and 122.

FIG. 11 is a top view of the two-piece seal 50 of FIGS. 2-5, taken along line 6-6 of FIG. 5, illustrating an embodiment of the metering holes 56 in a multi-row configuration 370 of differently shaped holes 372 (e.g., chevron-shaped, diamond-shaped, and X-shaped holes). In the illustrated embodiment, the multi-row configuration 370 has the differently shaped holes 372 arranged in a staggered rows 374, 376, 378, 380, and 382. In particular, rows 374 and 376 have first shaped holes 384, rows 378 and 380 have second shaped holes 386, and row 382 has third shaped holes 388. In the illustrated embodiment, the first shaped holes 384 are chevron-shaped or V-shaped, the second shaped holes 386 are diamond-shaped, and the third shaped holes 388 are X-shaped. For example, the chevron-shaped holes 384 may be disposed in the outermost rows 374 and 376, and may be specifically designed to increase cooling (e.g., impingement cooling and/or film cooling) of the seal regions 130 and 132. By further example, the diamond-shaped holes 386 and X-shaped holes 388 may be configured to meter the leakage flow and/or provide central cooling of the seal 50. Again, the holes 56 (e.g., 384, 386, and 388) may have uniform or non-uniform angles, shapes, sizes, or other characteristics. The illustrated configuration 370 may be selected to meter the leakage flow and increase cooling of the seal 50, the seal regions 130 and 132, or the segments 120 and 122.

FIG. 12 is a top view of the two-piece seal 50 of FIGS. 2-5, taken along line 6-6 of FIG. 5, illustrating an embodiment of the metering holes 56 in a multi-row configuration 390 of differently shaped holes 392 (e.g., triangular and circular holes). In the illustrated embodiment, the multi-row configuration 390 has the differently shaped holes 392 arranged in a staggered rows 394, 396, and 398. In particular, rows 394 and 396 are aligned with one another, while row 398 is staggered centrally between the rows 394 and 396. Furthermore, rows 394 and 396 have first shaped holes 400, while row 398 has second shaped holes 402. In the illustrated embodiment, the first shaped holes 400 are triangular holes, and the second shaped holes 402 are circular holes. For example, the triangular holes 400 may be disposed in the outermost rows 394 and 396, and may be specifically designed to increase cooling (e.g., impingement cooling and/or film cooling) of the seal regions 130 and 132. By further example, the centrally located circular holes 402 may be configured to meter the leakage flow and/or provide central cooling of the seal 50. Again, the holes 56 (e.g., 400 and 402) may have uniform or non-uniform angles, shapes, sizes, or other characteristics. The illustrated configuration 390 may be selected to meter the leakage flow and increase cooling of the seal 50, the seal regions 130 and 132, or the segments 120 and 122.

FIGS. 13-17 are partial cross-sectional side views of the two-piece seal 50 of FIGS. 2-12, taken along line 13-13 of FIG. 6, illustrating various shapes and angles of the metering holes 56. The illustrated metering holes 56 may be applicable to a one-piece or multi-piece construction of the seal 50 of FIGS. 2-5, any of the metering hole configurations of FIGS. 6-12, any of the seals depicted in FIGS. 18-28, or any combination thereof. Referring first to FIG. 13, a partial cross-sectional side view of the two-piece seal 50 of FIGS. 2-12, taken along line 13-13 of FIG. 6, is provided to illustrate an embodiment of a metering hole 56 having a cylindrical shape 410 (e.g., cylindrical metering hole) of a constant diameter 412 at a perpendicular angle 414 relative to a surface 416 of the seal 50. As a result, opposite side walls 418 and 420 are substantially parallel to one another from the surface 416 to an opposite surface 422. The illustrated hole 56, 410 may be specifically selected and positioned along the seal 50 at a region suitable to meter the leakage flow and/or increase cooling of the seal 50, the seal regions 130 and 132, or the segments 120 and 122.

FIG. 14 is a partial cross-sectional side view of the two-piece seal 50 of FIGS. 2-12, taken along line 13-13 of FIG. 6, illustrating an embodiment of a metering hole 56 having a conical shape 430 (e.g., a conical metering hole) of a variable diameter 432. Similar to the embodiment of FIG. 13, a centerline 434 of the conical metering hole 430 is disposed at a perpendicular angle 436 relative to a surface 438 of the seal 50. In other embodiments, the conical metering hole 430 may be oriented at another angle 436, such as approximately 5 to 60, 10 to 45, or 15 to 30 degrees. Furthermore, opposite side walls 440 and 442 gradually converge toward one another from the surface 438 to an opposite surface 444. In certain embodiments, an angle 446 of convergence of the side walls 440 and 442 relative to the centerline 434 may be approximately 1 to 60, 5 to 45, 10 to 30, or 15 to 20 degrees. The illustrated hole 56, 430 may be specifically selected and positioned along the seal 50 at a region suitable to meter the leakage flow and/or increase cooling of the seal 50, the seal regions 130 and 132, or the segments 120 and 122.

FIG. 15 is a partial cross-sectional side view of the two-piece seal 50 of FIGS. 2-12, taken along line 13-13 of FIG. 6, illustrating an embodiment of a metering hole 56 having a cylindrical shape 450 (e.g., cylindrical metering hole) of a constant diameter 452 at a non-perpendicular angle 454 relative to a surface 456 of the seal 50. As a result, opposite side walls 458 and 460 are substantially parallel to one another from the surface 456 to an opposite surface 462. The illustrated hole 56, 450 may be specifically selected and positioned along the seal 50 at a region suitable to meter the leakage flow and/or increase cooling of the seal 50, the seal regions 130 and 132, or the segments 120 and 122. In certain embodiments, the illustrated hole 56, 450 may have a conical shape similar to the embodiment of FIG. 14.

FIG. 16 is a partial cross-sectional side view of the two-piece seal 50 of FIGS. 2-12, taken along line 13-13 of FIG. 6, illustrating an embodiment of a metering hole 56 having a forked path 470 (e.g., Y-shaped split path). In the illustrated embodiment, the forked path 470 includes an entry path 472, a diverging region 474, and a pair of diverging outlet paths 476 and 478. As illustrated, the diverging region 474 is disposed intermediate opposite surfaces 480 and 482, such that the path 472 splits into paths 476 and 478 internally within the seal 50. For example, the entry path 472 may be formed in the first piece 52 of the seal 50, while the diverging outlet paths 476 and 478 may be formed in the second piece 54 of the seal 50. Furthermore, the diverging outlet paths 476 and 478 may be disposed at respective angles 484 and 486 relative to an axis 488 of the entry path 472, which may be perpendicular or non-perpendicular to the surface 480. In certain embodiments, the angles 484 and 486 may be equal or different from one another, and may be approximately 5 to 60, 10 to 45, or 20 to 30 degrees. The illustrated hole 56 (e.g., forked path 470) may be specifically selected and positioned along the seal 50 at a region suitable to meter the leakage flow and/or increase cooling of the seal 50, the seal regions 130 and 132, or the segments 120 and 122. In certain embodiments, the illustrated paths 472, 476, and/or 478 may have a conical shape similar to the embodiment of FIG. 14.

FIG. 17 is a partial cross-sectional side view of the two-piece seal 50 of FIGS. 2-12, taken along line 13-13 of FIG. 6, illustrating an embodiment of a metering hole 56 having a forked path 490 (e.g., V-shaped split path). In the illustrated embodiment, the forked path 490 includes a pair of diverging paths 492 and 494, which begin at a surface 496 and extend through the seal 50 to an opposite surface 498. Similar to the embodiment of FIG. 16, the diverging paths 492 and 494 may be disposed at respective angles 500 and 502 relative to an axis 504 perpendicular to the surface 496 and/or 498. In certain embodiments, the angles 500 and 502 may be equal or different from one another, and may be approximately 5 to 60, 10 to 45, or 20 to 30 degrees. The illustrated hole 56 (e.g., forked path 490) may be specifically selected and positioned along the seal 50 at a region suitable to meter the leakage flow and/or increase cooling of the seal 50, the seal regions 130 and 132, or the segments 120 and 122. In certain embodiments, the illustrated paths 492 and 494 may have a conical shape similar to the embodiment of FIG. 14.

FIG. 18 is a perspective view of an embodiment of a two-piece seal 550 (first and second pieces 552 and 554) with a plurality of metering holes 556, wherein the seal 550 includes an intermediate portion 558 and opposite first and second sealing end portions 560 and 562 outwardly curving to define w-shaped or m-shaped ends 564 and 566. In the illustrated embodiment, the first sealing end portion 560 having the m-shaped end 564 has curved sealing interfaces 568 and 570 disposed opposite from one another about a first space 572 (i.e., the first space 572 divided by the intermediate portion 558 into a first cavity 574 and a second cavity 576). The curved sealing interfaces 568 and 570 first curve away from one another in a first direction 578 (i.e., away from the intermediate portion 558). Then, the curved sealing interfaces 568 and 570 curve away and then towards one another in a second direction 580 (i.e., towards the intermediate portion 558). Similarly, the second sealing end portion 562 having the m-shaped end 566 has curved sealing interfaces 582 and 584 disposed opposite from one another about a second space 586 (i.e., the second space 586 divided by the intermediate portion 558 into a third cavity 588 and a fourth cavity 590). The curved sealing interfaces 582 and 584 first curve away from one another in a first direction 592 (i.e., away from the intermediate portion 558). Then, the curved sealing interfaces 582 and 584 curve away and then towards one another in a second direction 594 (i.e., towards the intermediate portion 558). Accordingly, each curved sealing interface 568, 570, 582, and 584 may be described as c-shaped or as a curled portion. As discussed below, the two-piece construction (e.g., pieces 552 and 554), the metering holes 556, and the m-shaped ends 564 and 566 substantially improve the performance of the seal 550 in environments subject to high temperatures, vibration, motion, and thermal expansion and contraction.

Although the seal 550 may be a one-piece structure, the illustrated embodiment of the seal 550 is made with first and second pieces 552 and 554 coupled together at the intermediate portion 558. The first piece 552 includes a first plate 596 having a first intermediate plate portion 598 disposed between opposite curved end plate portions 600 and 602, wherein the curved end plate portion 600 includes the curved sealing interface 568, and the curved end plate portion 602 includes the curved sealing interface 582. The second piece 554 includes a second plate 604 having a first intermediate plate portion 606 disposed between opposite curved end plate portions 608 and 610, wherein the curved end plate portion 608 includes the curved sealing interface 570, and the curved end plate portion 610 includes the curved sealing interface 584. As illustrated, the curved end plate portions 600 and 608 of the first and second plate 596 and 604 have the curved sealing interfaces 568 and 570 that first curve away from one another in the first direction 578 (i.e., away from the first and second intermediate plate portions 598 and 606), and then curve away and then towards one another in the second direction 580 (i.e., towards the first and second intermediate plate portions 598 and 606). Similarly, the curved end plate portions 602 and 610 of the first and second plate 596 and 604 have the curved sealing interfaces 582 and 584 that first curve away from one another in the first direction 592 (i.e., away from the first and second intermediate plate portions 598 and 606), and then curve away and then towards one another in the second direction 594 (i.e., towards the first and second intermediate plate portions 598 and 606). The first and second intermediate plate portions 598 and 606 are coupled together at an interface 612 along the longitudinal axis 618 at one or more locations, such as joints 614 and 616. For example, the interface 612 may be a planar interface between the plate portions 598 and 606, while the joints 614 and 616 may be linear joints, planar joints, or spot joints between the plate portions 598 and 606. For example, the linear joints 614 and 616 are depicted as linear joints, as represented by dashed lines 614 and 616. The joints 614 and 616 may include welded joints, brazed joints, diffusion bonded joints, adhesive joints, or any other type of fastening mechanism.

In certain embodiments, the first and second pieces 552 and 554 may be constructed of the same material or a different material. For example, the pieces 552 and 554 may be made of the same or different metals, such as different spring steels or nickel based alloys. By further example, the pieces 552 and 554 may be made with materials having the same or different coefficient of thermal expansion, modulus of elasticity, materials, or a combination thereof. The first and second pieces 552 and 554 also may be constructed with different thicknesses or other dimensions to vary the bending stiffness of the curved end plate portions 600, 602, 608, and 610. As discussed below, the different construction of the two pieces 552 and 554 may improve the performance of the seal 550 subjected to high temperatures. For example, the two-piece seal 550 (e.g., the first and second pieces 552 and 554) may be made of two different materials with different coefficients of thermal expansion to cause the seal 550 to bend or bow along its longitudinal axis 618, thereby improving the sealing effectiveness between sealing surfaces, as discussed above with reference to the embodiment of FIG. 4.

The shape or geometry of the seal 550 also may improve the sealing effectiveness of the seal 550, particularly in environments subject to high temperatures, vibration, motion, and thermal expansion and contraction. In the illustrated embodiment, the intermediate plate portions 598 and 606 of the plates 596 and 604 are substantially flat or planar, although other embodiments of the plate portions 598 and 606 may have a wavy shape as discussed in further detail below. Furthermore, the intermediate plate portions 598 and 606 (e.g., joints 614 and 616) may function as pivot points, axes of rotation, or axes of bending for the curved end plate portions 600, 602, 608, and 610 of the plates 596 and 604. The curved sealing interfaces 568 and 570 along the curved end plate portions 600 and 608 are configured to resiliently deflect toward and away from one another relative to the intermediate portion 558 (e.g., portions 598 and 606), and the curved sealing interfaces 582 and 584 along the curved end plate portions 602 and 610 are configured to resiliently deflect toward and away from one another relative to the intermediate portion 558 (e.g., portions 598 and 606). For example, the resilient deflection of the curved end plate portions 600, 602, 608, and 610 may occur relative to the joints 614 and 616. Thus, the m-shaped end 564 defined by the opposite curved end plate portions 600 and 608 (e.g., curved sealing interfaces 568 and 570) may serve as a first m-shaped spring element, while the m-shaped end 566 defined by the opposite curved end plate portions 602 and 610 (e.g., curved sealing interfaces 582 and 584) may serve as a second m-shaped spring element. Together, the m-shaped ends 564 and 566 and the intermediate portion 558 may be described as forming a spring-loaded seal 550. The m-shaped ends 564 and 566 also may serve as rotational joints, pivot joints, or cam members, thereby enabling rotational motion along sealing surfaces. For example, the curved sealing interfaces 568 and 570 are configured to enable rotation of the sealing end portion 560 along a first sealing region, while the curved sealing interfaces 582 and 584 are configured to enable rotation of the second sealing end portion 562 along a second sealing region.

The illustrated metering holes 556 include a first plurality of metering holes 620 and a second plurality of metering holes 622. The metering holes 556 are configured to control or meter the leakage flow through the seal 550. For example, the metering holes 556 may be designed to provide a certain flow rate or percentage of leakage flow depending on the particular application. In this manner, the metering holes 556 may permit a controlled amount of leakage flow to improve the sealing effectiveness of the seal 550 along the curved sealing interfaces 568, 570, 582, and 584, thereby reducing the possibility of leakage along the curved sealing interfaces 568, 570, 582, and 584. The metering holes 556 also may be used for cooling various hot regions along the seal 550, in the seal regions, or in the parts adjacent the seal regions. For example, the metering holes 556 may be configured to provide film cooling (e.g., a thin film of coolant flow) along a surface of the seal 550 or adjacent structures, or the metering holes 556 may be configured to provide impingement cooling (e.g., jets of coolant flow) against a surface of the seal 550 or adjacent structures. The film cooling may be described as flowing parallel to the surface being cooled, whereas the impingement cooling may be described as flow crosswise (e.g., perpendicular) to the surface being cooled. However, the metering holes 556 may be oriented at any angle relative to hot regions to cool the hot regions. For example, the first plurality of metering holes 620 may be directed toward the first sealing end portion 560 (e.g., curved sealing interface 568 or 570) or associated sealing region at a first angle 624, while the second plurality of metering holes 622 may be directed toward the second sealing end portion 562 (e.g., curved sealing interface 582 or 584) or associated sealing region at a second angle 626. The angles 624 and 626 may range between approximately 0 to 90, 5 to 60, 10 to 45, or 15 to 30 degrees. Various angles, shapes, and configurations of the metering holes are discussed in detail above with reference to FIGS. 6-17.

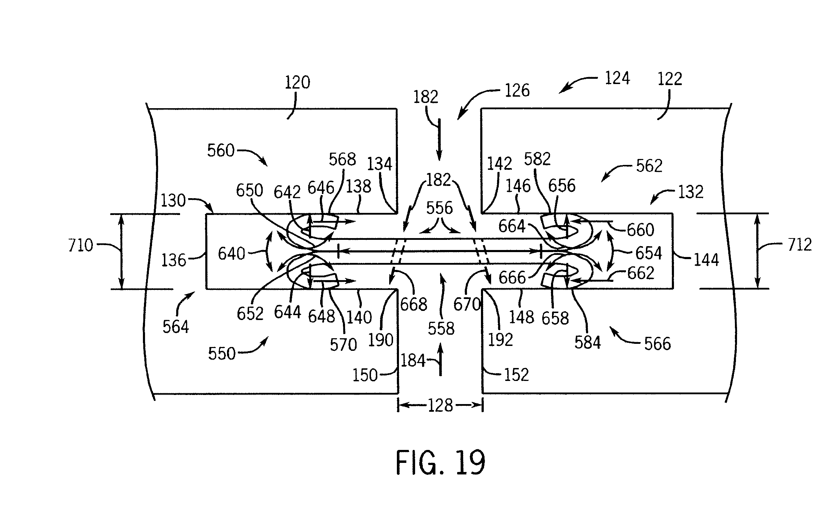

FIG. 19 is a cross-sectional side view of an embodiment of the two-piece seal 550 of FIG. 18 mounted between adjacent segments 120 and 122 of a turbomachine 124, e.g., the turbine system 10. In certain embodiments, the adjacent segments 120 and 122 may be disposed side-by-side in the axial direction 38, the radial direction 40, or the circumferential direction 42 with an intermediate gap or space 126. For example, the gap 126 may have a width 128 between the adjacent segments 120 and 122. The illustrated seal 550 extends across the gap 126 into opposite first and second seal regions 130 and 132 (e.g., slots, recesses, or chambers) in the adjacent segments 120 and 122. For example, the first seal region 130 may include a first opening 134, a first base wall 136, and opposite side walls 138 and 140 extending from the first opening 134 to the first base wall 136. The second seal region 132 may include a second opening 142, a second base wall 144, and opposite side walls 146 and 148 extending from the second opening 142 to the second base wall 144. The first sealing end portion 560 is disposed within the first seal region 130, such that the curved sealing interface 568 is disposed along the side wall 138, and the curved sealing interface 570 is disposed along the side wall 140. The second sealing end portion 562 is disposed within the second seal region 132, such that the curved sealing interface 582 is disposed along the side wall 146, and the curved sealing interface 584 is disposed along the side wall 148. The intermediate portion 558 of the seal 550 is disposed in the gap 126 between opposite faces 150 and 152 of the respective segments 120 and 122, and includes the metering holes 556 (e.g., 620 and 622) to control a leakage flow and/or cool hot regions on or near the seal 550.

In the illustrated embodiment, the first and second sealing end portions 560 and 562 are configured to seal with the respective seal regions 130 and 132 via spring forces and frictional forces. For example, the first sealing end portion 560 includes the m-shaped end 564 with the opposite curved sealing interfaces 568 and 570, which are configured to deflect toward and away from one another as indicated by arrow 640, thereby providing biasing forces or spring forces 642 and 644 against the side walls 138 and 140. For example, the curved sealing interfaces 568 and 570 may be compressed together between the side walls 138 and 140, such that the curved sealing interfaces 568 and 570 maintain contact despite vibration or motion. The curved sealing interfaces 568 and 570 are also frictionally seated along the side walls 138 and 140 via respective frictional forces 646 and 648. Furthermore, the curved sealing interfaces 568 and 570 are also configured to pivot or rotate relative to the side walls 138 and 140 as indicated by rotational arrows 650 and 652. As discussed in detail above with reference to FIG. 4, the rotational motion 650 and 652 along the side walls 138 and 140 may result from a bending or bowing of the spring 550. Similarly, the second sealing end portion 562 includes the m-shaped end 566 with the opposite curved sealing interfaces 582 and 584, which are configured to deflect toward and away from one another as indicated by arrow 654, thereby providing biasing forces or spring forces 656 and 658 against the side walls 146 and 148. For example, the curved sealing interfaces 582 and 584 may be compressed together between the side walls 146 and 148, such that the curved sealing interfaces 582 and 584 maintain contact despite vibration or motion. The curved sealing interfaces 582 and 584 are also frictionally seated along the side walls 146 and 148 via respective frictional forces 660 and 662. Furthermore, the curved sealing interfaces 582 and 584 are also configured to pivot or rotate relative to the side walls 146 and 148 as indicated by rotational arrows 664 and 666. As discussed in detail above with reference to FIG. 4, the rotational motion 664 and 666 along the side walls 146 and 148 may result from a bending or bowing of the spring 550.

In operation, the seal 550 is configured to seal the gap 126 between the adjacent segments 120 and 122 between a first fluid region or flow 182 and a second fluid region or flow 184. For example, in certain embodiments, the first flow 182 may be substantially cooler than the second flow 184. In context of a turbomachine, such as a compressor or turbine, the first flow 182 may be a cooling flow (e.g., air flow), while the second flow 184 may be a heated fluid such as compressed air, hot gases of combustion, or the like. Accordingly, the seal 550 may be subjected to significant temperatures, thermal gradients, vibration, motion, and thermal expansion and contraction between the segments 120 and 122. For example, the width 128 of the gap 126 may decrease in response to thermal expansion of the segments 120 and 122, while the width 128 may increase in response to thermal contraction of the segments 120 and 122. Accordingly, the biasing forces 642, 644, 656, and 658, the frictional forces 646, 648, 660, and 662, the deflection motion 640 and 654, and the rotational motion 650, 652, 664, and 666 may be configured to maintain a positive and consistent sealing interface between the seal 550 and the side walls 138, 140, 146, and 148 of the seal regions 130 and 132 despite the conditions of the system.

The metering holes 556 further improve the seal 550 by controlling any leakage flow between the first and second flows 182 and 184. In the illustrated embodiments, the leakage flow includes a first fluid flow 668 (e.g., air flow) through the first plurality of metering holes 620, and a second fluid flow 670 (e.g., air flow) through the second plurality of metering holes 622. These fluid flows 668 and 670 are configured to control the amount of leakage flow from region 182 to region 184, thereby helping to reduce the possibility of leakage along the curved seal interfaces 568, 570, 582, and 584. The fluid flows 668 and 670 also provide cooling in the vicinity of the seal 550, e.g., areas 190 and 192. As illustrated, the metering holes 556 (e.g., metering holes 620 and 622) are angled away from one another toward the opposite segments 120 and 122 and/or associated seal regions 130 and 132. For example, the fluid flows 668 and 670 may be angled to flow into the seal regions 130 and 132 to help cool the side walls 138, 140, 146, and 148 and the curved sealing interfaces 570 and 584 of the seal 550. In this manner, the cooling fluid flows 668 and 670 may protect the seal 550 and/or walls 138, 140, 146, and 148 from any thermal damage, wear, or the like. The cooling flows 668 and 670 also may serve as shielding fluid flows to reduce chemical attack, corrosion, or other damage to the seal 550 caused by the second fluid flow 184.

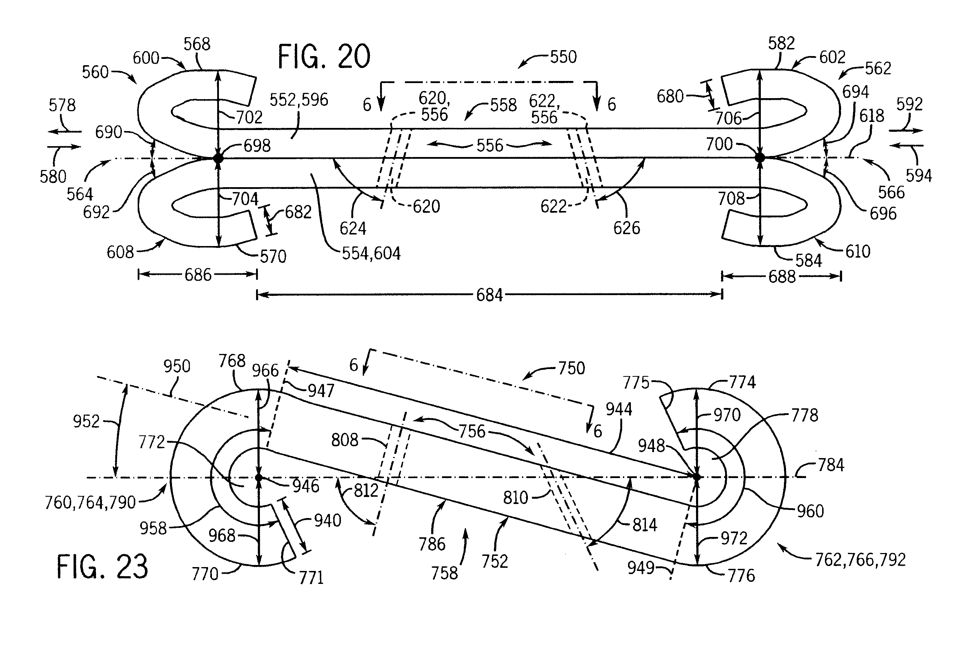

FIG. 20 is a cross-sectional side view of an embodiment of the two-piece seal 550 of FIG. 2, illustrating various dimensions of the seal 550. As illustrated, the seal 550 includes the first piece 552 (e.g., first plate 596) and the second piece 554 (e.g., second plate 604). In certain embodiments, the first and second plates 596 and 604 may have equal or different thicknesses 680 and 682 to control the bending stiffness or other characteristics of the spring 550, e.g., in the m-shaped ends 564 and 566. For example, each plate 596 and 604 may have a uniform or variable thickness 680 or 682 lengthwise along the longitudinal axis 618. For example, the thickness 680 or 682 may increase or decrease with distance from the intermediate portion 558. The seal 550 also includes a central length 684 of the intermediate portion 558, an end length 686 of the first sealing end portion 560, and an end length 688 of the sealing end portion 562. These lengths 684, 686, and 688 may be varied to control the range of defection of the entire seal 550 as well as the m-shaped ends 564 and 566. Furthermore, the central length 684 may be selected based on the width 128 of the gap 126 between adjacent segments 120 and 122, while the end lengths 686 and 688 may be selected based on the depths of the sealing regions 130 and 132 in the adjacent segments 120 and 122.

The seal 550 also includes various angles and offsets relative to the longitudinal axis 618 through the seal 550. For example, the curved end plate portions 600, 602, 608, and 610 may be disposed at respective angles 690, 692, 694, and 696 relative to the longitudinal axis 618, wherein the angles may be approximately 0 to 90, 5 to 75, 10 to 60, 15 to 45, or 20 to 30 degrees. In particular, the angles are selected to provide divergence away from points 698 and 700 along the longitudinal axis 618 at opposite ends of each curved end plate portion 600, 602, 608, and 610. At a distance 702 from the point 698, the curved end plate portion 600 converges toward the axis 618 in opposite directions 578 and 580. Similarly, at a distance 704 from the point 698, the curved end plate portions 608 converges toward the axis 618 in opposite directions 578 and 580. In other words, the curved end plate portions 600 and 608 curve inwardly towards the axis 618 and one another about the point 698. Similarly, at a distance 706 from the point 700, the curved end plate portion 602 converges toward the axis 618 in opposite directions 592 and 594. Similarly, at a distance 708 from the point 700, the curved end plate portions 610 converges toward the axis 618 in opposite directions 592 and 594. In other words, the curved end plate portions 602 and 610 curve inwardly towards the axis 618 and one another about the point 700. This curvature of the sealing end portions 560 and 562 provide the m-shaped ends 564 and 566, which enable the curved sealing interfaces 568, 570, 582, and 584 to maintain contact while pivoting along the side walls 138, 140, 146, and 148. The angles 690, 692, 694, and 696 may be increased to enable a greater range of pivoting movement of the curved sealing interfaces 568, 570, 582, and 584 along the side walls 138, 140, 146, and 148. Furthermore, the radii of each curved portion 600, 608, 602, and 610 may be adjusted to control the slope of pivoting movement.

As further illustrated in FIG. 20, the offset distance between the curved end plate portions 600, 608, 602, and 610 may be increased or decreased to control the spring stiffness (e.g., biasing forces), the range of deflection, and other characteristics of the m-shaped ends 564 and 566. For example, the curved end plate portions 600, 608, 602, and 610 may be disposed at respective offset distances 702, 704, 706, and 708 relative to the longitudinal axis 618, wherein the offset distances may be based on a distance 710 (FIG. 19) between the side walls 138 and 140 and a distance 712 (FIG. 19) between the side walls 146 and 148 in the seal regions 130 and 132. For example, the offset distances 702, 704, 706, and 708 may be approximately 50 to 200, 55 to 150, or 60 to 125, or 75 to 100 percent of the distances 710 and 712 while not installed in the sealing regions 130 and 132. In the illustrated embodiment, the offset distances 702, 704, 706, and 708 are defined between the respective points 698 and 700 and the outside of the respective curved sealing interfaces 568, 608, 582, and 584. In other embodiments, the offset distances may be defined between other points along the longitudinal axis 618 and other portions of the curved sealing interfaces 568, 608, 582, and 584 and may have similar ranges as discussed above. Accordingly, a variety of dimensions may be controlled to improve the effectiveness of the seal 550.

The metering holes 556 also may have a variety of angles, shapes, and configurations configured to control the leakage flow and cooling. As illustrated in FIG. 20, the first plurality of metering holes 620 are disposed at the angle 624 relative to the longitudinal axis 618, while the second plurality of metering holes 622 are disposed at the angle 626 relative to the longitudinal axis 618. These angles 624 and 626 may be approximately 0 to 90, 20 to 70, 30 to 60, or 40 to 50 degrees, or any other suitable angle. Embodiments of the metering holes 620 and 622 may have angles 624 and 626 of approximately 10, 20, 30, 40, 50, or 60 degrees, for example.

The seal 550 depicted in FIGS. 18-20 may be constructed with a variety of manufacturing techniques. For example, a flat metal plate may be roll formed to produce the first and second plates 596 and 604. Subsequently, the plates 596 and 604 may be coupled together at the intermediate portion 558. For example, the intermediate plate portions 598 and 606 maybe coupled together via welding, brazing, diffusion bonding, fasteners, or any combination thereof. The metering holes 556 may be formed after connecting the intermediate plate portions 598 and 606, for example, by punching or drilling the holes 620 and 622 through both plates 596 and 604. In some embodiments, the seal 550 may be further treated with a coating or heat treatment. For example, a wear resistant coating, a chemical resistant coating, a thermal barrier coating, a sealant coating, a low friction coating, or any combination thereof, may be added to all or part of the exterior surface of the seal 550.

FIG. 21 is a perspective view of an embodiment of a seal 750 formed from a single piece 752 having a plurality of metering holes 756. The seal 750 includes an intermediate portion 758 and first and second sealing end portions 760 and 762 inwardly curving to define c-shaped ends 764 and 766 on opposite sides of the intermediate portion 758, yielding a seal 750 having an overall s-shape. In the illustrated embodiment, the first sealing end portion 760 having the c-shaped end 764 has curved sealing interfaces 768 and 770 disposed opposite from one another about a first space 772. Similarly, the second sealing end portion 762 having the c-shaped end 766 has curved sealing interfaces 774 and 776 disposed opposite from one another about a second space 778. As discussed below, the metering holes 756 and the opposite c-shaped ends 764 and 766 substantially improve the performance of the seal 750 in environments subject to high temperatures, vibration, motion, and thermal expansion and contraction.

Although the seal 750 may be a two-piece structure, the illustrated embodiment of the seal 750 is made with a single piece 752. The piece 752 includes plate 786 having an intermediate plate portion 788 disposed between opposite curved end plate portions 790 and 792, wherein the curved end plate portion 790 includes the curved sealing interfaces 768 and 770, and the curved end plate portion 792 includes the curved sealing interface 774 and 776. As illustrated, the curved end plate portion 790 has the curved sealing interface 768 extending from the intermediate plate portion 788, while the curved sealing interface 770 extends to a free end 771. Similarly, the curved end plate portions 792 has the curved sealing interface 776 extending from the intermediate plate portion 788, while the curved sealing end interface 774 extends to the free end 775. As illustrated, the curved sealing interfaces 774 and 770 are disposed on opposite sides of the intermediate portion 788 of the plate 786.

The shape or geometry of the seal 750 also may improve the sealing effectiveness of the seal 750, particularly in environments subject to high temperatures, vibration, motion, and thermal expansion and contraction. In the illustrated embodiment, the intermediate plate portion 788 of the plate 786 is substantially flat and tilted with respect to a longitudinal axis 784, although other embodiments of the intermediate plate portion 788 may have a wavy shape as discussed in further detail below. Furthermore, the intermediate plate portion 788 may function as a pivot point, axis of rotation, or axis of bending for the curved end plate portions 790 and 792 of the plate 786. The curved sealing interfaces 768 and 770 along the curved end plate portion 790 are configured to resiliently deflect toward and away from one another relative to the longitudinal axis 784, and the curved sealing interfaces 774 and 776 along the curved end plate portion 792 are configured to resiliently deflect toward and away from one another relative to the longitudinal axis 784. Thus, the c-shaped end 764 defined by the curved end plate portion 790 (e.g., curved sealing interfaces 768 and 770) may serve as a first c-shaped spring element, while the c-shaped end 766 defined by the curved end plate portion 792 (e.g., curved sealing interfaces 774 and 776) may serve as a second c-shaped spring element. Together, the c-shaped ends 764 and 766 and the intermediate portion 758 may be described as forming an s-shaped seal 750, such as a spring-loaded s-shaped seal 750. The c-shaped ends 764 and 766 also may serve as rotational joints, pivot joints, or cam members, thereby enabling rotational motion along sealing surfaces. For example, the curved sealing interfaces 768 and 770 are configured to enable rotation of the sealing end portion 760 along a first sealing region, while the curved sealing interfaces 774 and 776 are configured to enable rotation of the second sealing end portion 762 along a second sealing region.

The illustrated metering holes 756 include a first plurality of metering holes 808 and a second plurality of metering holes 810. The metering holes 756 are configured to control or meter the leakage flow through the seal 750. For example, the metering holes 756 may be designed to provide a certain flow rate or percentage of leakage flow depending on the particular application. In this manner, the metering holes 756 may permit a controlled amount of leakage flow to improve the sealing effectiveness of the seal 750 along the curved sealing interfaces 768, 770, 774, and 776, thereby reducing the possibility of leakage along the curved sealing interfaces 768, 770, 774, and 776. The metering holes 756 also may be used for cooling various hot regions along the seal 750, in the seal regions, or in the parts adjacent the seal regions. For example, the metering holes 756 may be configured to provide film cooling (e.g., a thin film of coolant flow) along a surface of the seal 750 or adjacent structures, or the metering holes 756 may be configured to provide impingement cooling (e.g., jets of coolant flow) against a surface of the seal 750 or adjacent structures. The metering holes 756 may be oriented at any angle relative to hot regions to cool the hot regions. For example, the first plurality of metering holes 808 may be directed toward the first sealing end portion 760 (e.g., curved sealing interface 768 or 770) or associated sealing region at a first angle 812, while the second plurality of metering holes 810 may be directed toward the second sealing end portion 762 (e.g., curved sealing interface 774 or 776) or associated sealing region at a second angle 814. The angles 812 and 814 may range between approximately 0 to 90, 5 to 60, 10 to 45, or 15 to 30 degrees. Various angles, shapes, and configurations of the metering holes 756 are discussed in detail above with reference to FIGS. 6-17.

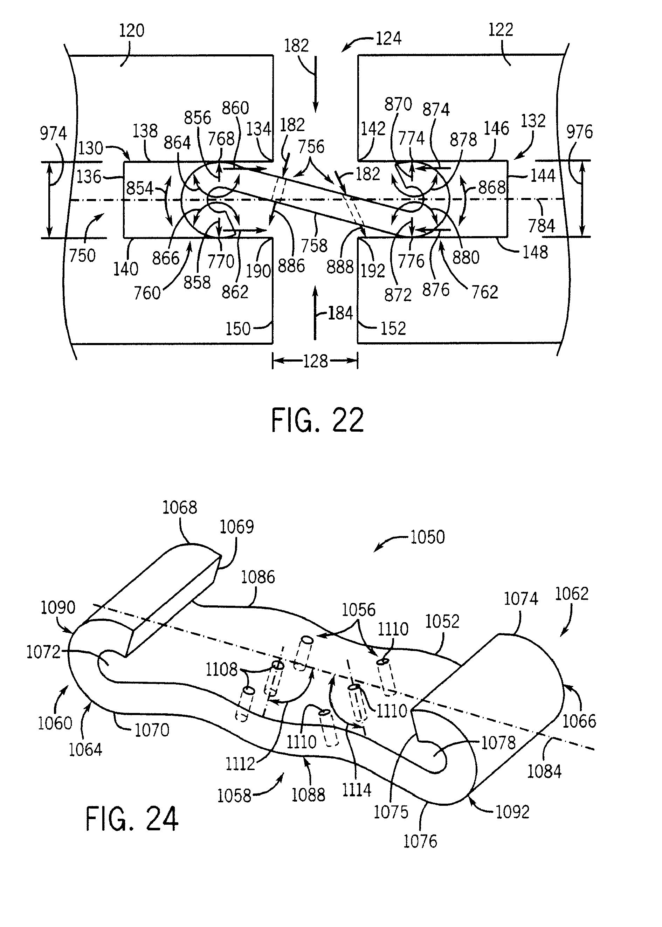

FIG. 22 is a cross-sectional side view of an embodiment of the one-piece seal 750 of FIG. 21 mounted between adjacent segments 120 and 122 of a turbomachine 124, e.g., the turbine system 10, similar to the embodiments of FIGS. 3 and 19. In certain embodiments, the adjacent segments 120 and 122 may be disposed side-by-side in the axial direction 38, the radial direction 40, or the circumferential direction 42 with an intermediate gap or space 126. For example, the gap 126 may have a width 128 between the adjacent segments 120 and 122. As presented above with reference to FIGS. 3 and 19, the illustrated seal 750 extends across the gap 126 into opposite first and second seal regions 130 and 132 (e.g., slots, recesses, or chambers) in the adjacent segments 120 and 122. The first sealing end portion 760 is disposed within the first seal region 130, such that the curved sealing interface 768 is disposed along the side wall 138, and the curved sealing interface 770 is disposed along the side wall 140. The second sealing end portion 762 is disposed within the second seal region 132, such that the curved sealing interface 774 is disposed along the side wall 146, and the curved sealing interface 776 is disposed along the side wall 148. The intermediate portion 758 of the seal 750 is disposed in the gap 126 between opposite faces 150 and 152 of the respective segments 120 and 122, and includes the metering holes 756 (e.g., 808 and 810) to control a leakage flow and/or cool hot regions on or near the seal 750.

In the illustrated embodiment, the first and second sealing end portions 760 and 762 are configured to seal with the respective seal regions 130 and 132 via spring forces and frictional forces. For example, the first sealing end portion 760 includes the c-shaped end 764 with the opposite curved sealing interfaces 768 and 770, which are configured to deflect toward and away from one another as indicated by arrow 854, thereby providing biasing forces or spring forces 856 and 858 against the side walls 138 and 140. For example, the curved sealing interfaces 768 and 770 may be compressed together between the side walls 138 and 140, such that the curved sealing interfaces 768 and 770 maintain contact despite vibration or motion. The curved sealing interfaces 768 and 770 are also frictionally seated along the side walls 138 and 140 via respective frictional forces 860 and 862. Furthermore, the curved sealing interfaces 768 and 770 are also configured to pivot or rotate relative to the side walls 138 and 140 as indicated by rotational arrows 864 and 866. As discussed in detail above with reference to FIG. 4, the rotational motion 864 and 866 along the side walls 138 and 140 may result from a bending or bowing of the spring 750. Similarly, the second sealing end portion 762 includes the c-shaped end 766 with the curved sealing interfaces 774 and 776, which are configured to deflect toward and away from one another as indicated by arrow 868, thereby providing biasing forces or spring forces 870 and 872 against the side walls 146 and 148. For example, the curved sealing interfaces 774 and 776 may be compressed together between the side walls 146 and 148, such that the curved sealing interfaces 774 and 776 maintain contact despite vibration or motion. The curved sealing interfaces 774 and 776 are also frictionally seated along the side walls 146 and 148 via respective frictional forces 874 and 876. Furthermore, the curved sealing interfaces 774 and 776 are also configured to pivot or rotate relative to the side walls 146 and 148 as indicated by rotational arrows 878 and 880. As discussed in detail above with reference to FIG. 4, the rotational motion 878 and 880 along the side walls 146 and 148 may result from a bending or bowing of the spring 750.

In operation, the seal 750 is configured to seal the gap 126 between the adjacent segments 120 and 122 between a first fluid region or flow 182 and a second fluid region or flow 184. For example, in certain embodiments, the first flow 182 may be substantially cooler than the second flow 184. In context of a turbomachine, such as a compressor or turbine, the first flow 182 may be a cooling flow (e.g., air flow), while the second flow 184 may be a heated fluid such as compressed air, hot gases of combustion, or the like. Accordingly, the seal 750 may be subjected to significant temperatures, thermal gradients, vibration, motion, and thermal expansion and contraction between the segments 120 and 122. For example, the width 128 of the gap 126 may decrease in response to thermal expansion of the segments 120 and 122, while the width 128 may increase in response to thermal contraction of the segments 120 and 122. Accordingly, the biasing forces 856, 858, 870, and 872, the frictional forces 860, 862, 874, and 876, the deflection motion 854 and 868, and the rotational motion 864, 866, 878, and 880 may be configured to maintain a positive and consistent sealing interface between the seal 750 and the side walls 138, 140, 146, and 148 of the seal regions 130 and 132 despite the conditions of the system.

The metering holes 756 further improve the seal 750 by controlling any leakage flow between the first and second flows 182 and 184. In the illustrated embodiments, the leakage flow includes a first fluid flow 886 (e.g., air flow) through the first plurality of metering holes 808, and a second fluid flow 888 (e.g., air flow) through the second plurality of metering holes 810. These fluid flows 886 and 888 are configured to control the amount of leakage flow from region 182 to region 184, thereby helping to reduce the possibility of leakage along the curved seal interfaces 768, 770, 774, and 776. The fluid flows 886 and 888 also provide cooling in the vicinity of the seal 750, e.g., areas 190 and 192. As illustrated, the metering holes 756 (e.g., metering holes 808 and 810) are angled away from one another toward the opposite segments 120 and 122 and/or associated seal regions 130 and 132. For example, the fluid flows 886 and 888 may be angled to flow into the seal regions 130 and 132 to help cool the side walls 138, 140, 146, and 148 and the curved sealing interfaces 770 and 776 of the seal 750. In this manner, the cooling fluid flows 886 and 888 may protect the seal 750 and/or walls 138, 140, 146, and 148 from any thermal damage, wear, or the like. The cooling flows 886 and 888 also may serve as shielding fluid flows to reduce chemical attack, corrosion, or other damage to the seal 750 caused by the second fluid flow 184.

FIG. 23 is a cross-sectional side view of an embodiment of the one-piece seal 750 of FIG. 21, illustrating various dimensions of the seal 750. As illustrated, the seal 750 includes a single piece 752 (e.g., plate 786). In certain embodiments, the plate 786 may have a thickness 940 to provide the desired characteristics (e.g., bending stiffness) of the spring 750, e.g., in the c-shaped ends 764 and 766. For example, the plate 786 may have a uniform or variable thickness 940 lengthwise along the longitudinal axis 784. For example, the thickness 940 may increase or decrease with distance from the intermediate portion 758. The seal 750 also includes a central length 944 of the intermediate portion 758, which extends between points 946 (i.e. line 947) and 948 (i.e., line 949) located at the center of the first and second spaces 772 and 778. The remainder of the length of the seal divided between the first sealing end portion 760 and the second sealing end portion 762. The central length 944 and the lengths of the sealing end portions 760 and 762 may be varied to control the range of defection of the entire seal 750 as well as the c-shaped ends 764 and 766. Furthermore, the central length 944 may be selected based on the width 128 of the gap 126 between adjacent segments 120 and 122, while the lengths of the sealing end portions 760 and 762 may be selected based on the depths of the sealing regions 130 and 132 in the adjacent segments 120 and 122.

The seal 750 also includes various angles and offsets throughout the seal 750. For example, an axis 950 of the intermediate portion 758 may be disposed at an angle 952 relative to the longitudinal axis 784. In certain embodiments, the angle 952 may be approximately 0 to 90, 5 to 75, 10 to 60, 15 to 45, or 20 to 30 degrees. The curved end plate portions 790 and 792 extend from and curve relative to the intermediate portion 758 (i.e., from lines 947 and 949) to the free ends 771 and 775. For example, the curved end plate portions 790 and 792 may extend through arcs 958 and 960 from the lines 947 and 949 to the free ends 771 and 775, respectively, wherein the angles of the arcs may be approximately 180 to 270, 190 to 260, 200 to 250, 205 to 245, or 210 to 240 degrees. In particular, the angles of the arcs 958 and 960 are selected to provide convergence of the curved end plate portions 790 and 792 toward the intermediate portion 758 of the seal 750. The curvature of the sealing ends 760 and 762 enables the curved sealing interfaces 768, 770, 774, and 776 to maintain contact while pivoting along the side walls 138, 140, 146, and 148. The angle and arcs 958 and 960 may be increased to enable a greater range of pivoting movement of the curved sealing interfaces 768, 770, 774, and 776 along the side walls 138, 140, 146, and 148. Furthermore, the radii of the sealing ends 760 and 762 may be adjusted to control the slope of pivoting movement.

As further illustrated in FIG. 23, the offset distance between the outside of the curved end plate portions 790 and 792 and the longitudinal axis 784 (i.e., points 946 and 948), may be increased or decreased to control the spring stiffness (e.g., biasing forces), the range of deflection, and other characteristics of the c-shaped ends 764 and 766. For example, the curved end plate portions 790 and 792 may be disposed at offset distances 966, 968, 970, and 972 relative to the longitudinal axis 784, wherein the offset distances may be based on a distance 974 (FIG. 22) between the side walls 138 and 140 a distance 976 (FIG. 22) between the side walls 146 and 148 in the seal regions 130 and 132. For example, the offset distances 966, 968, 970, and 972 may be approximately 50 to 200, 55 to 150, or 60 to 125, or 75 to 100 percent of the distance 974 or 976 while not installed in the sealing regions 130 and 132. Accordingly, a variety of dimensions may be controlled to improve the effectiveness of the seal 750.

The metering holes 756 also may have a variety of angles, shapes, and configurations configured to control the leakage flow and cooling. As illustrated in FIG. 23, the first plurality of metering holes 808 are disposed at the angle 812 relative to the longitudinal axis 784, while the second plurality of metering holes 810 are disposed at the angle 814 relative to the longitudinal axis 784. These angles 812 and 814 may be approximately 0 to 90, 20 to 70, 30 to 60, or 40 to 50 degrees, or any other suitable angle. Embodiments of the metering holes 808 and 810 may have angles 812 and 814 of approximately 10, 20, 30, 40, 50, or 60 degrees, for example. The seal 750 depicted in FIGS. 21-23 may be constructed with a variety of manufacturing techniques. For example, a flat metal plate may be roll formed to produce the plate 786. The metering holes 756 may be formed after forming the metal plate, for example, by punching or drilling the holes 808 and 810 through the plate 786. In some embodiments, the seal 750 may be further treated with a coating or heat treatment. For example, a wear resistant coating, a chemical resistant coating, a thermal barrier coating, a sealant coating, a low friction coating, or any combination thereof, may be added to all or part of the exterior surface of the seal 750.

FIG. 24 is a perspective view of an embodiment of a seal 1050 formed from a single piece 1052 having a plurality of metering holes 1056. The seal 1050 includes a wavy intermediate portion 1058 curving alternatively in opposite directions, and first and second sealing end portions 1060 and 1062 inwardly curving to define c-shaped ends 1064 and 1066 on the same side of the intermediate portion 1058. In the illustrated embodiment, the first sealing end portion 1060 having the c-shaped end 1064 has curved sealing interfaces 1068 and 1070 disposed opposite from one another about a first space 1072. Similarly, the second sealing end portion 1062 having the c-shaped end 1066 has curved sealing interfaces 1074 and 1076 disposed opposite from one another about a second space 1078. As discussed below, the wavy intermediate portion 1058, the metering holes 1056, and the opposite c-shaped ends 1064 and 1066 substantially improve the performance of the seal 1050 in environments subject to high temperatures, vibration, motion, and thermal expansion and contraction.

Although the seal 1050 may be a two-piece structure, the illustrated embodiment of the seal 1050 is made with a single piece 1052. The piece 1052 includes a plate 1086 having a wavy intermediate plate portion 1088 disposed between opposite curved end plate portions 1090 and 1092, wherein the curved end plate portion 1090 includes the curved sealing interfaces 1068 and 1070, and the curved end plate portion 1092 includes the curved sealing interface 1074 and 1076. As illustrated, the curved end plate portion 1090 has the curved sealing interface 1070 extending from the intermediate plate portion 1088, while the curved sealing interface 1068 extends to a free end 1069. Similarly, the curved end plate portion 1092 has the curved sealing interface 1076 extending from the wavy intermediate portion 1088, while the curved sealing interface 1074 extends to a free end 1075. As illustrated, the curved sealing interfaces 1068 and 1074 are disposed on the same side of the wavy intermediate portion 1088 of the plate 1086.

The shape or geometry of the seal 1050 also may improve the sealing effectiveness of the seal 1050, particularly in environments subject to high temperatures, vibration, motion, and thermal expansion and contraction. In the illustrated embodiment, the intermediate plate portion 1088 of the plate 1086 is substantially wavy to enable compression and expansion of the intermediate portion 1088 of the plate 1086 along a longitudinal axis 1084. Furthermore, the wavy intermediate plate portion 1088 may function as a pivot point, axis of rotation, or axis of bending for the curved end plate portions 1090 and 1092 of the plate 1086. The curved sealing interfaces 1068 and 1070 along the curved end plate portion 1090 are configured to resiliently deflect toward and away from one another relative to the longitudinal axis 1084, and the curved sealing interfaces 1074 and 1076 along the curved end plate portion 1092 are configured to resiliently deflect toward and away from one another relative to the longitudinal axis 1084. Thus, the c-shaped end 1064 defined by the curved end plate portion 1090 (e.g., curved sealing interfaces 1068 and 1070) may serve as a first c-shaped spring element, while the c-shaped end 1066 defined by the curved end plate portion 1092 (e.g., curved sealing interfaces 1074 and 1076) may serve as a second c-shaped spring element. Together, the c-shaped ends 1064 and 1066 and the intermediate portion 1058 may be described as forming an ox horn shaped seal 1050, such as a spring-loaded ox horn shaped seal 1050. The c-shaped ends 1064 and 1066 also may serve as rotational joints, pivot joints, or cam members, thereby enabling rotational motion along sealing surfaces. For example, the curved sealing interfaces 1068 and 1070 are configured to enable rotation of the sealing end portion 1060 along a first sealing region, while the curved sealing interfaces 1074 and 1076 are configured to enable rotation of the second sealing end portion 1062 along a second sealing region.

The illustrated metering holes 1056 include a first plurality of metering holes 1108 and a second plurality of metering holes 1110. The metering holes 1056 are configured to control or meter the leakage flow through the seal 1050. For example, the metering holes 1056 may be designed to provide a certain flow rate or percentage of leakage flow depending on the particular application. In this manner, the metering holes 1056 may permit a controlled amount of leakage flow to improve the sealing effectiveness of the seal 1050 along the curved sealing interfaces 1068, 1070, 1074, and 1076, thereby reducing the possibility of leakage along the curved sealing interfaces 1068, 1070, 1074, and 1076. The metering holes 1056 also may be used for cooling various hot regions along the seal 1050, in the seal regions, or in the parts adjacent the seal regions. For example, the metering holes 1056 may be configured to provide film cooling (e.g., a thin film of coolant flow) along a surface of the seal 1050 or adjacent structures, or the metering holes 1056 may be configured to provide impingement cooling (e.g., jets of coolant flow) against a surface of the seal 1050 or adjacent structures. The metering holes 1056 may be oriented at any angle relative to hot regions to cool the hot regions. For example, the first plurality of metering holes 1108 may be directed toward the first sealing end portion 1060 (e.g., curved sealing interface 1068 or 1070) or associated sealing region at a first angle 1112, while the second plurality of metering holes 1110 may be directed toward the second sealing end portion 1062 (e.g., curved sealing interface 1074 or 1076) or associated sealing region at a second angle 1114. The angles 1112 and 1114 may range between approximately 0 to 90, 5 to 60, 10 to 45, or 15 to 30 degrees. Various angles, shapes, and configurations of the metering holes 1056 are discussed in detail above with reference to FIGS. 6-17.

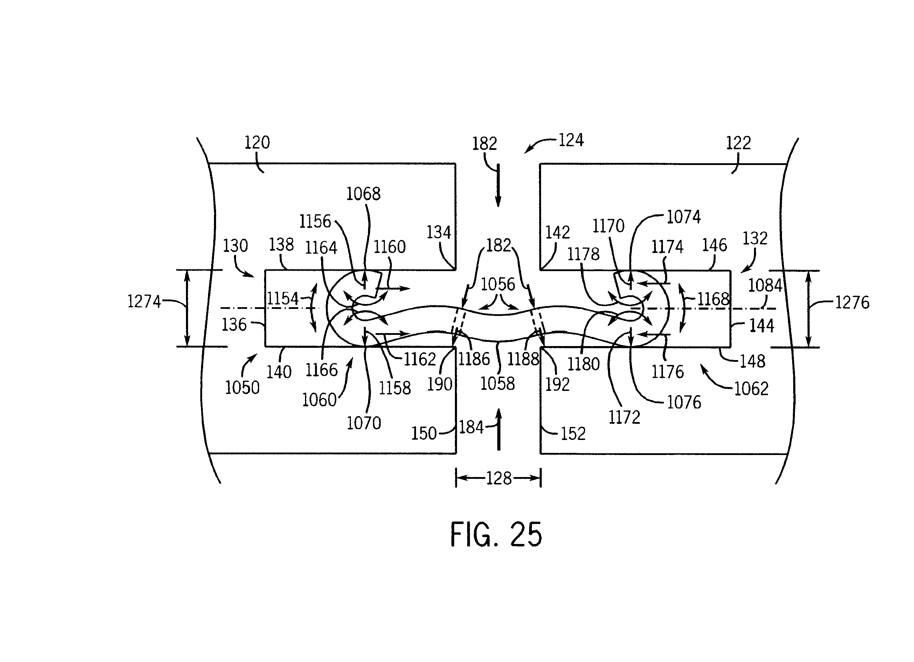

FIG. 25 is a cross-sectional side view of an embodiment of the one-piece seal 1050 of FIG. 24 mounted between adjacent segments 120 and 122 of a turbomachine 124, e.g., the turbine system 10, similar to the embodiments of FIGS. 3, 19, and 22. In certain embodiments, the adjacent segments 120 and 122 may be disposed side-by-side in the axial direction 38, the radial direction 40, or the circumferential direction 42 with an intermediate gap or space 126. For example, the gap 126 may have a width 128 between the adjacent segments 120 and 122. As presented above with reference to FIGS. 3, 19, and 22 the illustrated seal 1050 extends across the gap 126 into opposite first and second seal regions 130 and 132 (e.g., slots, recesses, or chambers) in the adjacent segments 120 and 122. The first sealing end portion 1060 is disposed within the first seal region 130, such that the curved sealing interface 1068 is disposed along the side wall 138, and the curved sealing interface 1070 is disposed along the side wall 140. The second sealing end portion 1062 is disposed within the second seal region 132, such that the curved sealing interface 1074 is disposed along the side wall 146, and the curved sealing interface 1076 is disposed along the side wall 148. The intermediate portion 1058 of the seal 1050 is disposed in the gap 126 between opposite faces 150 and 152 of the respective segments 120 and 122, and includes the metering holes 1056 (e.g., 1108 and 1110) to control a leakage flow and/or cool hot regions on or near the seal 1050.

In the illustrated embodiment, the first and second sealing end portions 1060 and 1062 are configured to seal with the respective seal regions 130 and 132 via spring forces and frictional forces. For example, the first sealing end portion 1060 includes the c-shaped end 1064 with the opposite curved sealing interfaces 1068 and 1070, which are configured to deflect toward and away from one another as indicated by arrow 1154, thereby providing biasing forces or spring forces 1156 and 1158 against the side walls 138 and 140. For example, the curved sealing interfaces 1068 and 1070 may be compressed together between the side walls 138 and 140, such that the curved sealing interfaces 1068 and 1070 maintain contact despite vibration or motion. The curved sealing interfaces 1068 and 1070 are also frictionally seated along the side walls 138 and 140 via respective frictional forces 1160 and 1162. Furthermore, the curved sealing interfaces 1068 and 1070 are also configured to pivot or rotate relative to the side walls 138 and 140 as indicated by rotational arrows 1164 and 1166. As discussed in detail above with reference to FIG. 4, the rotational motion 1164 and 1166 along the side walls 138 and 140 may result from a bending or bowing of the spring 1050, which may be further enhanced by the spring-like wavy intermediate portion 1058. Similarly, the second sealing end portion 1062 includes the c-shaped end 1066 with the curved sealing interfaces 1074 and 1076, which are configured to deflect toward and away from one another as indicated by arrow 1168, thereby providing biasing forces or spring forces 1170 and 1172 against the side walls 146 and 148. For example, the curved sealing interfaces 1074 and 1076 may be compressed together between the side walls 146 and 148, such that the curved sealing interfaces 1074 and 1076 maintain contact despite vibration or motion. The curved sealing interfaces 1074 and 1076 are also frictionally seated along the side walls 146 and 148 via respective frictional forces 1174 and 1176. Furthermore, the curved sealing interfaces 1074 and 1076 are also configured to pivot or rotate relative to the side walls 146 and 148 as indicated by rotational arrows 1178 and 1180. As discussed in detail above with reference to FIG. 4, the rotational motion 1178 and 1180 along the side walls 146 and 148 may result from a bending or bowing of the spring 1050.

In operation, the seal 1050 is configured to seal the gap 126 between the adjacent segments 120 and 122 between a first fluid region or flow 182 and a second fluid region or flow 184. For example, in certain embodiments, the first flow 182 may be substantially cooler than the second flow 184. In context of a turbomachine, such as a compressor or turbine, the first flow 182 may be a cooling flow (e.g., air flow), while the second flow 184 may be a heated fluid such as compressed air, hot gases of combustion, or the like. Accordingly, the seal 1050 may be subjected to significant temperatures, thermal gradients, vibration, motion, and thermal expansion and contraction between the segments 120 and 122. For example, the width 128 of the gap 126 may decrease in response to thermal expansion of the segments 120 and 122, while the width 128 may increase in response to thermal contraction of the segments 120 and 122. Accordingly, the biasing forces 1156, 1158, 1170, and 1172, the frictional forces 1160, 1162, 1174, and 1176, the deflection motion 1154 and 1168, and the rotational motion 1164, 1166, 1178, and 1180 may be configured to maintain a positive and consistent sealing interface between the seal 1050 and the side walls 138, 140, 146, and 148 of the seal regions 130 and 132 despite the conditions of the system.

The metering holes 1056 further improve the seal 1050 by controlling any leakage flow between the first and second flows 182 and 184. In the illustrated embodiments, the leakage flow includes a first fluid flow 1186 (e.g., air flow) through the first plurality of metering holes 1108, and a second fluid flow 1188 (e.g., air flow) through the second plurality of metering holes 1110. These fluid flows 1186 and 1188 are configured to control the amount of leakage flow from region 182 to region 184, thereby helping to reduce the possibility of leakage along the curved seal interfaces 1068, 1070, 1074, and 1076. The fluid flows 1186 and 1188 also provide cooling in the vicinity of the seal 1050, e.g., areas 190 and 192. As illustrated, the metering holes 1056 (e.g., metering holes 1108 and 1110) are angled away from one another toward the opposite segments 120 and 122 and/or associated seal regions 130 and 132. For example, the fluid flows 1186 and 1188 may be angled to flow into the seal regions 130 and 132 to help cool the side walls 138, 140, 146, and 148 and the curved sealing interfaces 1070 and 1076 of the seal 1050. In this manner, the cooling fluid flows 1186 and 1188 may protect the seal 1050 and/or walls 138, 140, 146, and 148 from any thermal damage, wear, or the like. The cooling flows 1186 and 1188 also may serve as shielding fluid flows to reduce chemical attack, corrosion, or other damage to the seal 1050 caused by the second fluid flow 184.

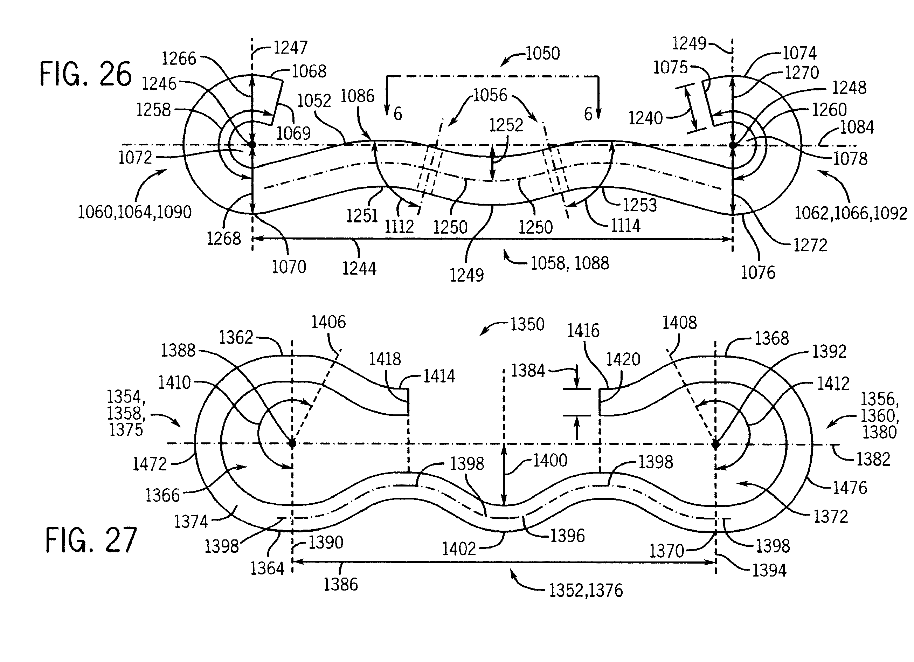

FIG. 26 is a cross-sectional side view of an embodiment of the one-piece seal 1050 of FIG. 24, illustrating various dimensions of the seal 1050. As illustrated, the seal 1050 includes a single piece 1052 (e.g., plate 1086). In certain embodiments, the plate 1086 may have a thickness 1240 to provide the desired characteristics (e.g., bending stiffness) of the spring 1050, e.g., in the c-shaped ends 1064 and 1066 or the wavy intermediate portion 1058. For example, the plate 1086 may have a uniform or variable thickness 1240 lengthwise along the longitudinal axis 1084. For example, the thickness 1240 may increase or decrease with distance from the intermediate portion 1058. The seal 1050 also includes a central length 1244 of the intermediate portion 1058, which extends between points 1246 (i.e. line 1247) and 1248 (i.e., line 1249) located at the center of the first and second spaces 1072 and 1078. The remainder of the length of the seal 1050 is divided between the first sealing end portion 1060 and the second sealing end portion 1062. The central length 1244 and the lengths of the sealing end portions 1060 and 1062 may be varied to control the range of defection of the entire seal 1050 as well as the c-shaped ends 1064 and 1066. Furthermore, the central length 1244 may be selected based on the width 128 of the gap 126 between adjacent segments 120 and 122, while the lengths of the sealing end portions 1060 and 1062 may be selected based on the depths of the sealing regions 130 and 132 in the adjacent segments 120 and 122.

The seal 1050 also includes various angles and offsets throughout the seal 1050. For example, an axis 1250 of the wavy intermediate portion 1058 may be offset from the longitudinal axis 1084 by a variable offset distance 1252, which may alternatingly increase and decrease between lines 1247 and 1249. In the illustrated embodiment, the distance 1252 is greater at a midpoint 1249 between points 1246 and 1248, while it is lesser at points 1251 and 1253. In other words, the points 1249,1251, and 1253 may be described as extrema or points where the axis 1250 of the wavy intermediate portion 1058 is nearest to and farthest from the longitudinal axis 1084. In certain embodiments, the wavy intermediate portion 1058 may have 1 to 10 or more extrema or inflection points. The curved end plate portions 1090 and 1092 are curved from the edges of the intermediate portion 1258 (i.e., from lines 1247 and 1249) to the free ends 1069 and 1075 according to a particular arc. For example, the curved end plate portions 1090 and 1092 may extend through arcs 1258 and 1260 relative to lines 1247 and 1249, respectively, wherein the angles of the arcs may be approximately 180 to 270, 190 to 260, 200 to 250, 205 to 245, or 210 to 240 degrees. In particular, the angles of the arcs 1258 and 1260 are selected to provide convergence of the curved end plate portions 1090 and 1092 toward the intermediate portion 1058 of the seal 1050. The curvature of the sealing end portions 1060 and 1062 enables the curved sealing interfaces 1068, 1070, 1074, and 1076 to maintain contact while pivoting along the side walls 138, 140, 146, and 148. The described angles 1258 and 1260 may be increased to enable a greater range of pivoting movement of the curved sealing interfaces 1068, 1070, 1074, and 1076 along the side walls 138, 140, 146, and 148. Furthermore, the radii of the sealing ends 1060 and 1062 may be adjusted to control the slope of pivoting movement.

As further illustrated in FIG. 26, the offset distance between the outside of the curved end plate portions 1090 and 1092 and the longitudinal axis 1084 (i.e., points 1246 and 1248), may be increased or decreased to control the spring stiffness (e.g., biasing forces), the range of deflection, and other characteristics of the c-shaped ends 1064 and 1066. For example, the curved end plate portions 1090 and 1092 may be disposed at offset distances 1266, 1268, 1270, and 1272 relative to the longitudinal axis 1084, wherein the offset distances may be based on a distance 1274 (FIG. 25) between the side walls 138 and 140 and a distance 1276 (FIG. 25) between the side walls 146 and 148 in the seal regions 130 and 132. For example, the offset distances 1266, 1268, 1270, and 1272 may be approximately 50 to 200, 55 to 150, or 60 to 125, or 75 to 100 percent of the distance 1274 and 1276 while not installed in the sealing regions 130 and 132. Accordingly, a variety of dimensions may be controlled to improve the effectiveness of the seal 1050.

The metering holes 1056 also may have a variety of angles, shapes, and configurations configured to control the leakage flow and cooling. As illustrated in FIG. 26, the first plurality of metering holes 1108 are disposed at the angle 1112 relative to the longitudinal axis 1084, while the second plurality of metering holes 1110 are disposed at the angle 1114 relative to the longitudinal axis 1084. These angles 1112 and 1114 may be approximately 0 to 90, 20 to 70, 30 to 60, or 40 to 50 degrees, or any other suitable angle. Embodiments of the metering holes 1108 and 1110 may have angles 1112 and 1114 of approximately 10, 20, 30, 40, 50, or 60 degrees, for example. The seal 1050 depicted in FIGS. 24-26 may be constructed with a variety of manufacturing techniques. For example, a flat metal plate may be roll formed to produce the plate 1086. The metering holes 1056 may be formed after forming the metal plate, for example, by punching or drilling the holes 1108 and 1110 through the plate 1086. In some embodiments, the seal 1050 may be further treated with a coating or heat treatment. For example, a wear resistant coating, a chemical resistant coating, a thermal barrier coating, a sealant coating, a low friction coating, or any combination thereof, may be added to all or part of the exterior surface of the seal 1050.

FIG. 27 is a cross-sectional side view of an embodiment of a one-piece seal 1350 similar to the seal 1050 of FIGS. 24-26, illustrating various dimensions of the seal 1350. The seal 1350 includes a wavy intermediate portion 1352 curving alternatively in opposite directions, and first and second sealing end portions 1354 and 1356 inwardly curving to define c-shaped ends 1358 and 1360 on the same side of the intermediate portion 1352. In the illustrated embodiment, the first sealing end portion 1354 having the c-shaped end 1358 has curved sealing interfaces 1362 and 1364 disposed opposite from one another about a first space 1366. Similarly, the second sealing end portion 1356 having the c-shaped end 1360 has curved sealing interfaces 1368 and 1370 disposed opposite from one another about a second space 1372. As discussed below, the wavy intermediate portion 1352 and the opposite c-shaped ends 1358 and 1360 substantially improve the performance of the seal 1350 in environments subject to high temperatures, vibration, motion, and thermal expansion and contraction.

Although the seal 1350 may be a two-piece structure, the illustrated embodiment of the seal 1350 is made with a single plate 1374. The plate 1374 includes a wavy intermediate plate portion 1376 disposed between opposite curved end plate portions 1378 and 1380, wherein the curved end plate portion 1378 includes the curved sealing interfaces 1362 and 1364, and the curved end plate portion 1380 includes the curved sealing interface 1368 and 1370. As illustrated, the curved sealing interfaces 1362 and 1364 are disposed on the same side of the wavy intermediate portion 1376 of the plate 1374.

The shape or geometry of the seal 1350 also may improve the sealing effectiveness of the seal 1350, particularly in environments subject to high temperatures, vibration, motion, and thermal expansion and contraction. In the illustrated embodiment, the intermediate plate portion 1376 of the plate 1374 is substantially wavy to enable compression and expansion of the intermediate portion 1376 of the plate 1374 along a longitudinal axis 1382. Furthermore, the wavy intermediate plate portion 1376 may function as a pivot point, axis of rotation, or axis of bending for the curved end plate portions 1378 and 1380 of the plate 1374. The curved sealing interfaces 1362 and 1364 along the curved end plate portion 1378 are configured to resiliently deflect toward and away from one another relative to the longitudinal axis 1382, and the curved sealing interfaces 1368 and 1370 along the curved end plate portion 1380 are configured to resiliently deflect toward and away from one another relative to the longitudinal axis 1382. Thus, the c-shaped end 1358 defined by the curved end plate portion 1378 (e.g., curved sealing interfaces 1362 and 1364) may serve as a first c-shaped spring element, while the c-shaped end 1360 defined by the curved end plate portion 1380 (e.g., curved sealing interfaces 1368 and 1370) may serve as a second c-shaped spring element. The c-shaped ends 1358 and 1360 also may serve as rotational joints, pivot joints, or cam members, thereby enabling rotational motion along sealing surfaces. For example, the curved sealing interfaces 1362 and 1364 are configured to enable rotation of the sealing end portion 1354 along a first sealing region, while the curved sealing interfaces 1368 and 1370 are configured to enable rotation of the second sealing end portion 1356 along a second sealing region.

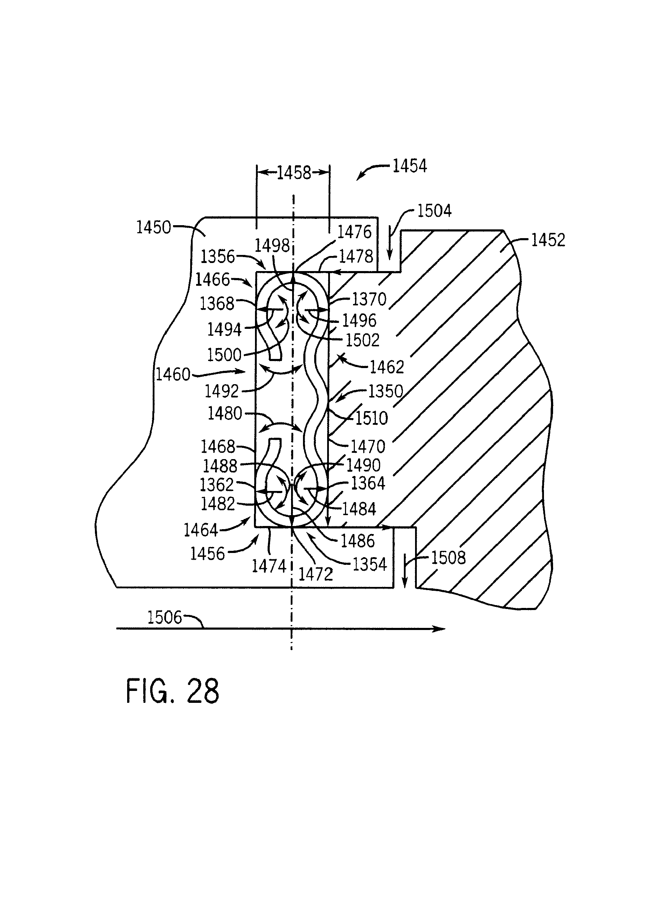

In certain embodiments, the plate 1374 may have a thickness 1384 to provide the desired characteristics (e.g., bending stiffness) of the spring 1350, e.g., in the c-shaped ends 1358 and 1356 or the wavy intermediate portion 1376. For example, the plate 1374 may have a uniform or variable thickness 1384 lengthwise along the longitudinal axis 1382. For example, the thickness 1384 may increase or decrease with distance from the intermediate portion 1352. The seal 1350 also includes a central length 1386 of the intermediate portion 1352, which extends between point 1388 (i.e. line 1390) and point 1392 (i.e., line 1394) located at the centers of the first and second spaces 1366 and 1372. The remainder of the length of the seal 1350 divided between the first sealing end portion 1354 and the second sealing end portion 1356. The central length 1386 and the lengths of the sealing end portions 1354 and 1356 may be varied to control the range of deflection of the entire seal 1350 as well as the c-shaped ends 1358 and 1360. Furthermore, the central length 1386 as well as the lengths of the sealing end portions 1060 and 1062 may be selected based on the width of the gap between adjacent segments, as discussed in further detail below with reference to FIG. 28.

The seal 1350 also includes various angles and offsets throughout the seal 1350. For example, an axis 1396 of the plate 1374 may alternatingly curve back and forth between extrema 1398, where the axis 1396 is nearest to and farthest from the longitudinal axis 1382. That is, at the extrema 1398 an offset distance between the axes 1382 and 1396 varies between local minimum and maximum values. In certain embodiments, the plate 1374 may include 1 to 10 or more extrema 1398 or inflection points. As illustrated, the distance 1400 is a local maximum at extrema 1398 at lines 1390 and 1394 as well as at a midpoint 1402 between lines 1390 and 1394. The distance 1400 is a local minimum at extrema 1398 between the midpoint 1402 and the lines 1390 and 1394. Again, the plate 1374 may have any number of extrema 1398 (e.g., local minima or maxima) or inflection points. The curved end plate portions 1378 and 1380 extend from the intermediate portion 1352 (i.e., from lines 1390 and 1394) to lines 1406 and 1408, respectively, according to a particular arc. For example, the curved end plate portions 1378 and 1380 may extend through arcs 1410 and 1412 relative to lines 1390 and 1394 and lines 1406 and 1408, respectively, wherein the arcs 1410 and 1412 may be approximately 180 to 270, 190 to 260, 200 to 250, 205 to 245, or 210 to 240 degrees. Beyond the lines 1406 and 1408, the curved end plate portions 1378 and 1380 have inwardly curved portions 1414 and 1416 that converge toward the longitudinal axis 1382, respectively. In particular, the inwardly curved portions 1414 and 1416 are selected to provide convergence of free ends 1418 and 1420 of curved end plate portions 1378 and 1380 toward the wavy intermediate portion 1376 of the seal 1350. The curvature of the sealing end portions 1354 and 1356 enables the curved sealing interfaces 1362, 1364, 1368, and 1370 to maintain contact while pivoting along the side walls between to turbine segments. The described arcs 1410 and 1412 may be increased to enable a greater range of pivoting movement of the curved sealing interfaces 1362, 1364, 1368, and 1370 between turbine segments.

FIG. 28 is a cross-sectional side view of an embodiment of the one-piece seal 1350 of FIG. 27 mounted between adjacent segments 1450 and 1452 of a turbomachine 1454, e.g., the turbine system 10. In certain embodiments, the adjacent segments 1450 and 1452 may be disposed side-by-side in the axial direction 38, the radial direction 40, or the circumferential direction 42 with an intermediate gap or space 1456. For example, the gap 1456 may have a width 1458 between the adjacent segments 1450 and 1452. The illustrated seal 1350 is axially loaded and extends across the gap 1456 into opposite first and second seal regions 1460 and 1462 (e.g., opposite sealing faces) between the adjacent segments 1450 and 1452. The first sealing end portion 1354 is disposed at a lower portion 1464 of the first and second seal regions 1460 and 1462, such that the curved sealing interface 1362 is disposed along a side wall 1468, and the curved sealing interface 1364 is disposed along a side wall 1470. Additionally, since the illustrated seal 1350 is axially loaded, a portion of the sealing end portion 1354 may also serve as a sealing interface 1472 that is disposed along a side wall 1474. The second sealing end portion 1356 is disposed at an upper portion 1466 of the first and second seal regions 1460 and 1462, such that the curved sealing interface 1368 is disposed along the side wall 1468, and the curved sealing interface 1370 is disposed along a side wall 1470. Additionally, since the illustrated seal 1350 is axially loaded, a portion of the sealing end portion 1356 may also serve as a sealing interface 1476 that is disposed along the side wall 1478. The intermediate portion 1352 of the seal 1350 is disposed in the gap 1456 between opposite faces 1460 and 1462 of the respective segments 1450 and 1452, and along with the sealing end portions 1354 and 1356, provide a tortuous path for air flow between the segments 1450 and 1452.

In the illustrated embodiment, the first and second sealing end portions 1354 and 1356 are configured to seal with the respective seal regions 1460 and 1462 via spring forces (e.g., spring loaded). For example, the first sealing end portion 1354 includes the c-shaped end 1358 with the curved sealing interfaces 1362, 1364, and 1472, which are configured to deflect as indicated by arrow 1480, thereby providing biasing forces or spring forces 1482, 1484, and 1486 against the side walls 1468, 1470, and 1474. For example, the curved sealing interfaces 1362 and 1364 may be compressed together between the side walls 1468 and 1470, such that the curved sealing interfaces 1362 and 1364 maintain contact despite vibration or motion. Furthermore, the curved sealing interfaces 1362 and 1364 are also configured to pivot or rotate relative to the side walls 1468 and 1470 as indicated by rotational arrows 1488 and 1490. As discussed in detail above with reference to FIG. 4, the rotational motion 1488 and 1490 along the side walls 1468 and 1470 may result from a bending or bowing of the spring 1350, which may be further enhanced by the spring-like wavy intermediate portion 1352. Similarly, the second sealing end portion 1356 includes the c-shaped end 1360 with the curved sealing interfaces 1368, 1370, and 1476, which are configured to deflect as indicated by arrow 1492, thereby providing biasing forces or spring forces 1494, 1496, and 1498 against the side walls 1468, 1470, and 1478. For example, the curved sealing interfaces 1368 and 1370 may be compressed together between the side walls 1468 and 1470, such that the curved sealing interfaces 1368 and 1370 maintain contact despite vibration or motion. Furthermore, the curved sealing interfaces 1368 and 1370 are also configured to pivot or rotate relative to the side walls 1468 and 1470 as indicated by rotational arrows 1500 and 1502. As discussed in detail above with reference to FIG. 4, the rotational motion 1500 and 1502 along the side walls 1468 and 1470 may result from a bending or bowing of the spring 1350.

In operation, the seal 1350 is configured to seal the gap 1456 between the adjacent segments 1450 and 1452 between a first fluid region or flow 1504 and a second fluid region or flow 1506. For example, in certain embodiments, the first flow 1504 may be substantially cooler than the second flow 1506. In context of a turbomachine, such as a compressor or turbine, the first flow 1504 may be a cooling flow (e.g., air flow), while the second flow 1506 may be a heated fluid such as compressed air, hot gases of combustion, or the like. Accordingly, the seal 1350 may be subjected to significant temperatures, thermal gradients, vibration, motion, and thermal expansion and contraction between the segments 1450 and 1452. For example, the width 1458 of the gap 1456 may decrease in response to thermal expansion of the segments 1450 and 1452, while the width 1458 may increase in response to thermal contraction of the segments 1450 and 1452. Additionally, the arcs 1410 and 1412 of the sealing ends 1354 and 1356 may be increased or decreased to control the spring stiffness (e.g., biasing forces), the range of deflection, and other characteristics of the c-shaped ends 1358 and 1360. For example, the curved end plate portions 1378 and 1380 may have be compressed by approximately 5 to 100, 10 to 75, or 25 to 50 percent from a normal state to a compressed state, which fits within the sealing regions 1460 and 1462. Accordingly, the biasing forces 1482, 1484, 1486, 1494, 1496, and 1498, the deflection motion 1492 and 1480, and the rotational motion 1488, 1490, 1500, and 1502 may be configured to maintain a positive and consistent sealing interface between the seal 1350 and the side walls 1468, 1470, 1474, and 1478 of the seal regions 1460 and 1462 despite the conditions of the system.

In contrast to embodiments previously presented, the embodiment of the seal 1350 of FIGS. 27-28 lacks metering holes. As such, the seal 1350 blocks and/or controls any leakage flow 1508 (e.g., air flow) between the first and second fluid flows 1504 and 1506 (e.g., air flows) by providing multiple seal points with a tortuous flow path between the first and second flows 1504 and 1506. For example, the seal 1350 contacts the seal regions 1460 and 1462 at seal points along the curved sealing interfaces 1362, 1364, 1368, and 1370. The seal 1350 also contacts the seal region 1462 at one or more seal points 1510 along the wavy intermediate portion 1352 (e.g., the wavy intermediate plate portion 1376). As discussed above, the wavy intermediate plate portion 1376 includes one or more extrema 1398. The seal point 1510 corresponds to the extrema 1398 at the midpoint 1402 of the intermediate plate portion 1352. In other embodiments, 1 to 10 or more extrema 1398 may function as seal points 1510 along the seal region 1462. Furthermore, the wavy shape of the intermediate plate portion 1376 may provide additional spring force 1486 and 1498 between the side walls 1474 and 1478. In other words, a greater number of extrema 1398 may enable greater compression along axis 1382 of the seal 1350, thereby improving the effectiveness of the seal 1350 in the illustrated arrangement of segments 1450 and 1452.

The seal 1350 depicted in FIGS. 27-28 may be constructed with a variety of manufacturing techniques. For example, a flat metal plate may be roll formed to produce the plate 1374. In some embodiments, the seal 1350 may be further treated with a coating or heat treatment. For example, a wear resistant coating, a chemical resistant coating, a thermal barrier coating, a sealant coating, a low friction coating, or any combination thereof, may be added to all or part of the exterior surface of the seal 1350.

Technical effects of the invention an improvement of seal effectiveness using spring loaded seals between turbomachine segments. This disclosure further improves seal effectiveness through the controlled thermal expansion and bending of seals, wherein the thermal expansion and bending of the seal helps to maintain seal seating during turbomachine operation. Also, this disclosure adds additional functionality to turbomachine seals through the introduction of metering holes, which provide a controlled leakage flow path that may be employed for impingement cooling of hot segment surfaces.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a turbomachine seal, comprising:
      a first sealing end portion comprising first and second curved sealing interfaces disposed opposite from one another about a first space, wherein the first and second curved sealing interfaces are configured to resiliently deflect toward and away from one another;
      a second sealing end portion comprising third and fourth curved sealing interfaces disposed opposite from one another about a second space, wherein the third and fourth curved sealing interfaces are configured to resiliently deflect toward and away from one another; and
      an intermediate portion extending between the first and second sealing end portions.
2. The system of clause 1, wherein the intermediate portion comprises at least one hole configured to direct a cooling flow toward a first sealing region having the first sealing end portion and a second sealing region having the second sealing end portion.
3. The system of clause 1 or 2, wherein the turbomachine seal is configured to be axially or circumferentially loaded between a first and a second turbomachine segment.
4. The system of any of clauses 1 to 3, wherein the turbomachine is a one-piece structure.
5. The system of any of clauses 1 to 4, wherein the turbomachine seal comprises a first plate and a second plate having different coefficients of thermal expansion to cause thermal bending of the turbomachine seal in response to different degrees of thermal expansion of the first and second plates.
6. The system of any clauses 1 to 5, wherein the first sealing end portion comprises a first U-shaped end portion having the first and second curved sealing interfaces, and the first U-shaped end portion has a first fixed end coupled to the intermediate portion and a first free end opposite from the first fixed end, wherein the second sealing end portion comprises a second U-shaped end portion having the third and fourth curved sealing interfaces, and the second U-shaped end portion has a second fixed end coupled to the intermediate portion and a second free end opposite from the second fixed end.
7. The system of clause 6, wherein the first free end and the second free end extend in opposite directions from the intermediate portion.
8. The system of clause 6, wherein the intermediate portion comprises a wavy portion curving alternatively in opposite directions.
9. The system of clause 6, wherein first or second curved sealing interface, the third or fourth sealing interface, the wavy portion, or any combination thereof, are configured to provide a tortuous air flow path between a first and a second turbomachine segment.
10. A system, comprising:
   a turbomachine seal, comprising:
      a first plate having a first curved sealing interface, a second curved sealing interface, and a first intermediate portion extending between the first and second curved sealing interfaces;
      a second plate having a third curved sealing interface, a fourth curved sealing interface, and a second intermediate portion extending between the third and fourth curved sealing interfaces;
      wherein the first and second intermediate portions are coupled together, the first and third curved sealing interfaces are configured to resiliently deflect toward and away from one another about a first space, the second and fourth curved sealing interfaces are configured to resiliently deflect toward and away from one another about a second space, and the first and second plates have different coefficients of thermal expansion to cause thermal bending of the turbomachine seal in response to different degrees of thermal expansion of the first and second plates.
11. The system of clause 10, wherein the turbomachine seal comprises at least one hole extending through the first and second intermediate portions, and the at least one hole is configured to meter a leakage flow and direct the leakage flow for cooling at least one region.
12. The system of clause 11, comprising a turbomachine having the turbomachine seal disposed between first and second segments.

## Claims

1. A system, comprising:
a seal (50) having a first sealing end portion (60), a second sealing end portion (62), and an intermediate portion (58) between the first and second sealing end portions (60,62), wherein the seal comprises at least one metering hole (56) configured to control a leakage flow across the seal (50).

2. The system of claim 1, wherein the at least one metering hole (56) is configured to direct the leakage flow to at least one region for cooling the at least one region.

3. The system of claim 2, wherein the at least one metering hole (56) is configured to direct the leakage flow toward a first sealing region having the first sealing end portion (60) and a second sealing region having the second sealing end portion (62).

4. The system of any of claims 1 to 3, wherein the first sealing end portion (60) comprises first and second curved sealing interfaces (68,70) disposed opposite from one another about a first space (72), and the second sealing end portion (62) comprises third and fourth curved sealing interfaces (74,76) disposed opposite from one another about a second space (72).

5. The system of claim 4, wherein the first and second curved sealing interfaces (68,70) are configured to resiliently deflect toward and away from one another, and the third and fourth curved sealing interfaces (74,76) are configured to resiliently deflect toward and away from one another.

6. The system of claim 4, wherein the first and second curved sealing interfaces (68,70) are configured to enable rotation of the first sealing end portion (60) along a first sealing region, and the third and fourth curved sealing interfaces (74,76) are configured to enable rotation of the second sealing end portion (62) along a second sealing region.

7. The system of any of claims 4 to 6, wherein the seal is a one-piece structure having the first and second sealing end portions (60,62) and the intermediate portion (58), the first sealing end portion (60) comprises a first U-shaped end portion (64) having the first and second curved sealing interfaces (68,70), and the second sealing end portion (62) comprises a second U-shaped end portion (66) having the third and fourth curved sealing interfaces (74,76).

8. The system of any of claims 4 to 6, wherein the seal comprises a first piece (52) having the first curved sealing interface (68) of the first sealing end portion (60), a first intermediate portion (88) of the intermediate portion (58), and the third curved sealing interface (74) of the second sealing end portion (62), and wherein the seal comprises a second piece (54) having the second curved sealing interface (70) of the first sealing end portion (60), a second intermediate portion (96) of the intermediate portion (58), and the fourth curved sealing interface (76) of the second sealing end portion (62).

9. The system of claim 8, wherein the first piece (52) comprises a first metal, and the second piece (54) comprises a second metal different from the first metal.

10. The system of claim 8, wherein the first and second curved sealing interfaces (68,70) curve away from one another and then curve toward one another in a first direction (80) away from the first and second intermediate portions, (88,96) and the third and fourth curved sealing interfaces (74,76) curve away from one another and then curve toward one another in a second direction (82) away from the first and second intermediate portions (88,96).

11. The system of claim 8, wherein the first and second curved sealing interfaces (68,70) curve away from one another in a first direction away from the first and second intermediate portions (88,96), and then curve away and then toward one another in a second direction toward the first and second intermediate portions (88,96), wherein the third and fourth curved sealing interfaces curve away from one another in a third direction away from the first and second intermediate portions (88,96), and then curve away and then toward one another in a fourth direction toward the first and second intermediate portions (88,96).

12. The system of any of claims 4 to 11, wherein the intermediate portion (58) comprises a wavy portion curving alternatively in opposite directions.

13. The system of any preceding claim, wherein the seal (50) is a turbomachinery seal.

14. The system of any preceding claim, comprising a turbomachine (124) having the seal disposed between a first and a second turbomachine segment (120,222).
